(19) Europäisches Patentamt
European Patent Office
Office européen des brevets

(11) **EP 3 428 763 A1**

(12) **EUROPEAN PATENT APPLICATION**

(43) Date of publication:
16.01.2019 Bulletin 2019/03

(51) Int Cl.:
**G05D 1/08** (2006.01)  **A63H 33/00** (2006.01)
**B25J 9/00** (2006.01)

(21) Application number: 18182851.8

(22) Date of filing: 11.07.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 14.07.2017 JP 2017138272

(71) Applicant: **Panasonic Intellectual Property Management Co., Ltd.**
**Osaka-shi, Osaka 540-6207 (JP)**

(72) Inventors:
• KUNITAKE, Yuji
  Osaka-shi, Osaka 540-6207 (JP)
• HIGUCHI, Seiya
  Osaka-shi, Osaka 540-6207 (JP)

(74) Representative: **Grünecker Patent- und Rechtsanwälte**
**PartG mbB**
**Leopoldstraße 4**
**80802 München (DE)**

(54) **ROBOT**

(57) A robot controlled by a control circuit moves to a predetermined target point by rotating its spherical body. The robot detects a value of a pitch angle and then determines a minimum control amount corresponding to the statistical value of the pitch angle. When the robot arrives at a predetermined distance short of the prede- termined target point, the control circuit generates a de- celeration control amount for a drive mechanism greater than or equal to the minimum control amount. The control circuit then decelerates rotation of the spherical body by controlling the drive mechanism in accordance with the deceleration control amount.

FIG. 1

EP 3 428 763 A1

**Description**

BACKGROUND

1. Technical Field

The present disclosure relates to a robot.

2. Description of the Related Art

Japanese Unexamined Patent Application Publication No. 2004-306251 discloses a robot that determines whether or not the robot is in a state of being held or a state of being lifted by a user's arms, and stops the operation of joint mechanisms based on a determination result.

SUMMARY

However, further improvement on the above-mentioned technique in related art is called for.
In one general aspect, the techniques disclosed here feature a robot including: a spherical body; a frame disposed inside the body; a display that is mounted in the frame and displays at least part of a face of the robot; a set of drive wheels that are mounted in the frame, are in contact with an inner circumferential surface of the body, and cause the body to move by rotating the body; a drive mechanism for weight that is mounted in the frame and causes the weight to reciprocate in a predetermined direction; an angular speed sensor that detects an angular speed, of the display, around an axis in a horizontal direction perpendicular to a moving direction of the body; a memory that stores a correspondence relationship between a reference pitch angle and a minimum control amount which is used in the drive mechanism for moving the body without being stopped; and a control circuit that, when the robot moves to a predetermined target point by rotating the body, detects a statistical value of a pitch angle which changes since an instruction to rotate the body is given to the drive mechanism, where the pitch angle is a cumulative value of the detected angular speed, determines the minimum control amount corresponding to the detected statistical value of the pitch angle by referring to the correspondence relationship, when the robot arrives at a location a predetermined distance short of the predetermined target point, generates a deceleration control amount for the drive mechanism in a range greater than or equal to the minimum control amount, according to a remaining distance to the predetermined target point, and decelerates the rotation of the body by controlling the drive mechanism in accordance with the deceleration control amount.
These general and specific aspects may be implemented using a system, a method, and a computer program, and any combination of systems, methods, and computer programs.
Thus, for instance, when a user calls a robot to move toward the user, the robot can stop at the location of the user.
Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

BRIEF DESCRIPTION OF THE DRAWINGS

Fig. 1 is an external appearance view of a robot according to a first embodiment of the present disclosure;
Fig. 2 is an internal perspective view of the robot according to the first embodiment of the present disclosure;
Fig. 3 is an internal side view in III direction of Fig. 2 of the robot according to the first embodiment of the present disclosure;
Fig. 4 is a side view in IV direction of Fig. 2, illustrating a rectilinear motion of the robot according to the first embodiment of the present disclosure;
Fig. 5 is a plan view in V direction of Fig. 2, illustrating a rotational motion of the robot according to the first embodiment of the present disclosure;
Fig. 6 is a perspective view illustrating a rotational motion of the robot according to the first embodiment of the present disclosure;
Fig. 7 is an illustration depicting a drive mechanism of a counterweight (weight) in the side view of Fig. 3;
Fig. 8A is a perspective view illustrating the operation of the drive mechanism of the counterweight (weight) when the counterweight (weight) is driven in a predetermined linear direction;
Fig. 8B is a side view illustrating the operation of the drive mechanism of the counterweight (weight) when the counterweight (weight) is driven in a predetermined linear direction;

Fig. 8C is a side view illustrating a state where the counterweight (weight) reciprocates in a predetermined linear direction in the side view of Fig. 3;

Fig. 9A is a perspective view illustrating the operation of the drive mechanism of the counterweight (weight) when a swing arm is rotated;

Fig. 9B is a side view illustrating the operation of the drive mechanism of the counterweight (weight) when the swing arm is rotated;

Fig. 9C is a plan view in IXC direction of Fig. 2, illustrating a state where the swing arm of the robot according to the first embodiment of the present disclosure is rotated;

Fig. 10 is a side view in X direction of Fig. 2, illustrating the posture of the robot when the counterweight (weight) is located forward;

Fig. 11 is a side view in XI direction of Fig. 2, illustrating the posture of the robot when the counterweight (weight) is located rearward;

Fig. 12 is a front view in XII direction of Fig. 2, illustrating the posture of the robot when the counterweight (weight) is located rightward;

Fig. 13 is a front view in XIII direction of Fig. 2, illustrating the posture of the robot when the counterweight (weight) is located leftward;

Fig. 14 is a view illustrating the posture of the robot until the body starts to rotate in a forward direction indicated by an arrow;

Fig. 15 is an illustration depicting an example of an entire configuration of a robot system which uses the robot according to the first embodiment of the present disclosure;

Fig. 16 is a block diagram illustrating the robot according to the first embodiment of the present disclosure;

Fig. 17 is an illustration depicting a space in which the robot according to the first embodiment of the present disclosure works, and part of processing performed on a first user by the robot;

Fig. 18 is a chart illustrating map information, stored in a memory, on the surrounding environment of the robot;

Fig. 19 is an illustration depicting two axes (Y-axis, Z-axis) intersecting perpendicularly to X-axis which is defined by the forward direction of the robot in a three-dimensional space;

Fig. 20 is a table illustrating an example of data configuration of a control amount determination database which indicates a relationship between a maximum pitch angle and a minimum control amount according to the type of floor surface;

Fig. 21 is a graph illustrating the difference between stop locations according to the type of floor surface on which the robot moves when a control amount is determined by trapezoidal control;

Fig. 22 is a graph illustrating a relationship between a remaining distance from a deceleration start location to a target location in a range to the target location and the control amount when the robot is stopped at a target location using Expression (1) for each of wood floor and carpet;

Fig. 23 is a graph illustrating a variation in the control amount in the period from start of movement to stop of the robot according to the first embodiment of the present disclosure;

Fig. 24 is a graph illustrating a change in pitch angle for each of floor surfaces during the period from reception of a movement start command by the robot until the robot actually starts to move;

Fig. 25 is a flowchart illustrating the main routine of the robot according to the first embodiment of the present disclosure;

Fig. 26 is a flowchart illustrating target location setting processing in Fig. 25;

Fig. 27 is a flowchart illustrating drive control processing in Fig. 25;

Fig. 28 is an illustration depicting the posture of the robot at the time of moving in a second embodiment of the present disclosure;

Fig. 29 is a table illustrating the data configuration of a control amount determination database in the second embodiment of the present disclosure;

Fig. 30 is an illustration depicting a space in which the robot according to the second embodiment of the present disclosure works, and part of processing performed on a first user by the robot;

Fig. 31 is a flowchart illustrating drive control processing according to the second embodiment of the present disclosure;

Fig. 32 is a flowchart illustrating the details of update processing for a minimum control amount in step S1201 of Fig. 31;

Fig. 33 is a table illustrating the data configuration of a ring buffer according to the second embodiment of the present disclosure; and

Fig. 34 is a table illustrating the data configuration of a control amount determination database according to a modification of the second embodiment of the present disclosure.

DETAILED DESCRIPTION

(Underlying Knowledge Forming Basis of Aspect of the Present Disclosure)

First, the inventor has been studying a robot that has a spherical body and moves by rotating the body.
The inventor has been studying the function that allows a user of the above-mentioned robot to move the robot to the location of the user by calling the name of the robot.
In order to achieve such function of the robot, the inventor has devised the following specifications.
Specifically, the robot recognizes an instruction for moving the robot to the location of the user and identifies the location of the user based on the voice uttered by the user. The robot then sets the identified location of the user as a target point, and starts to move to the target point. When detecting arrival to the target point, the robot stops the movement motion.
However, after the inventor tried various experiments, it was found that stopping the robot at the target point is not necessarily easy. This is because the body of the robot is spherical and is likely to be rolled, and thus stopping the robot at a desired location is not easy. As a consequence, the robot sometimes stopped short of the location of the user or passed by the location of the user due to inertia even after driving of the robot was stopped.
Therefore, in order to avoid stopping of the robot short of the location of the user or stopping of the robot after passing the location of the user, the performance of the robot had to be improved so that the robot stops at the location of the user.
After intensive study, the inventor has found that in order to stop the robot at the location of the user, not only information indicating the speed of movement of the robot and information indicating the distance to the target point, but also information indicating the material of a moving surface are needed.
Meanwhile, the robot itself can identify the information indicating the speed of movement of the robot, for instance, from information indicating the number of revolutions of a motor inside the robot. Similarly, the robot itself can identify the information indicating the distance to the target point based on, for instance, information inputted from a camera built in the robot.
As for the information indicating the material of a moving surface, the inventor found a problem that such information is not directly identifiable from the information inputted from sensors provided inside the robot.
As a result of intensive study, the inventor focused on the fact that when the robot starts to move, a rotation angle of the body of the robot varies according to the material of a moving surface. For instance, when a moving surface is wood floor, the friction between the robot and the moving surface is relatively low. Thus, in this case, the angle of rotation of the body of the robot is relatively small. In contrast, when the moving surface is carpet, the friction between the robot and the moving surface is relatively high. Thus, in this case, the angle of rotation of the body of the robot is relatively large. Consequently, although the information indicating the material of a moving surface is not directly identifiable from the information inputted from sensors provided inside the robot, the information is identifiable based on the rotation angle of the body of the robot when the robot starts to move.
Based on the knowledge described above, the inventor has devised an aspect of the invention below.
A robot according to an aspect of the present disclosure includes: a spherical body; a frame disposed inside the body; a display that is mounted in the frame and displays at least part of a face of the robot; a set of drive wheels that are mounted in the frame, are in contact with an inner circumferential surface of the body, and cause the body to move by rotating the body; a drive mechanism for weight that is mounted in the frame and causes the weight to reciprocate in a predetermined direction; an angular speed sensor that detects an angular speed, of the display, around an axis in a horizontal direction perpendicular to a moving direction of the body; a memory that stores a correspondence relationship between a reference pitch angle and a minimum control amount which is used in the drive mechanism for moving the body without being stopped; and a control circuit that, when the robot moves to a predetermined target point by rotating the body, detects a statistical value of a pitch angle which changes since an instruction to rotate the body is given to the drive mechanism, where the pitch angle is a cumulative value of the detected angular speed, determines the minimum control amount corresponding to the detected statistical value of the pitch angle by referring to the correspondence relationship, when the robot arrives at a location a predetermined distance short of the predetermined target point, generates a deceleration control amount for the drive mechanism in a range greater than or equal to the minimum control amount, according to a remaining distance to the predetermined target point, and decelerates the rotation of the body by controlling the drive mechanism in accordance with the deceleration control amount.
According to the aspect, there is provided an angular speed sensor that detects an angular speed with respect to the horizontal direction perpendicular to the moving direction of the body so that when the robot moves to a predetermined target point by rotating the body, a statistical value of the angular speed is detected, which changes in a predetermined time since an instruction of rotating the body is given to the drive mechanism.
Thus, a minimum control amount corresponding to a statistical value of the detected pitch angle is determined, and when the robot arrives at a location a predetermined distance short of the target point, a deceleration control amount for the drive mechanism is generated according to the remaining distance to the target point in a range greater than or equal to the minimum control amount so that rotation of the body is decelerated by controlling the drive mechanism in accordance with the deceleration control amount.

Thus, the robot can stop at the location of the user in consideration of the material of a moving surface based on the rotation angle of the body of the robot at the start of movement of the robot without stopping short of the location of the user or stopping after passing the location of the user.

In other words, the robot decelerates in a range greater than or equal to the minimum control amount in accordance with the deceleration control amount, and thus it is possible to prevent stopping of the robot short of the location of the user. Also, the robot decelerates near the predetermined target point in accordance with a deceleration control amount in the vicinity of the minimum control amount, and thus it is possible to avoid rolling of the robot due to inertia after an instruction of stopping rotation of the body is given. Therefore, when an instruction of stopping the rotation of the body is given, the robot can be stopped at the timing.

Also, in the aspect, the reference pitch angle includes a first reference pitch angle and a second reference pitch angle, before the robot starts to move, the control circuit may detect a maximum pitch angle as a statistical value of the pitch angle, and may determine that the minimum control amount is a first control amount corresponding to the first reference pitch angle corresponding to the maximum pitch angle, after the robot starts to move, the control circuit may detect an average pitch angle as the statistical value of the pitch angle, may determine that the minimum control amount is a second control amount corresponding to the second reference pitch angle corresponding to the average pitch angle, and may generate the deceleration control amount in a range greater than or equal to the minimum control amount which is determined before the robot arrives at the location the predetermined distance short of the predetermined target point.

In the aspect, before the robot starts to move, a first control amount corresponding to the first reference pitch angle corresponding to the detected maximum pitch angle is determined to be a minimum control amount, and after the robot starts to move, a second control amount corresponding to the second reference pitch angle corresponding to the detected average pitch angle is determined. Therefore, even when the floor surface for the robot is changed to a floor surface with a different material during movement of the robot, the robot can be stopped at a target point.

Also, in the aspect, the control circuit may decelerate the rotation of the body by decreasing the deceleration control amount by S-curve control.

In the aspect, the rotation of the body is decelerated by S-curve control, and thus the robot can be stopped without wobbling at a predetermined target point.

Also, in the aspect, when movement of the robot is started by rotating the body, the control circuit may accelerate the rotation of the body by increasing an acceleration control amount for accelerating the rotation of the body by trapezoidal control until a rotational speed of the body reaches a predetermined speed.

In the aspect, when the robot is started to move, the body is accelerated by trapezoidal control until the rotational speed of the body reaches a predetermined speed, and thus it is possible to shorten the movement time of the robot to a predetermined target point.

Also, in the aspect, after the rotational speed of the body reaches the predetermined speed, the control circuit may maintain the rotational speed of the body at the predetermined speed until the robot arrives at the location the predetermined distance short of the predetermined target point.

In the aspect, after the rotational speed of the body reaches a predetermined speed, the rotational speed of the body is maintained at the predetermined speed until the robot arrives at a location a predetermined distance short of a predetermined target point, and thus it is possible to prevent the rotational speed of the body from exceeding the predetermined speed. Therefore, the rotational speed of the body can be prevented from increasing excessively.

Also, in the aspect, the robot may further include: a camera included in the frame; and a microphone included in the frame. The memory may store reference data image for checking a person and reference voice data for recognizing voice, and the control circuit, when determining that a predetermined person has uttered predetermined words based on voice data inputted from the microphone and the reference voice data and recognizing the predetermined person based on image data inputted from the camera and the reference data image, may set a location of the predetermined person as the predetermined target point.

In the aspect, it is determined that a predetermined person utters predetermined words based on voice data and reference voice data inputted from a microphone, and when a predetermined person is recognized based on image data and reference data image inputted from a camera, the location of the predetermined person is set as a predetermined target point. Thus, in the aspect, for instance, even when multiple persons are present around the robot, the robot can be stopped at the location of a person who has uttered the predetermined words.

Also, in the aspect, the control circuit may generate the deceleration control amount using a calculation expression below: (SIN(3*$\pi$/2 - $\pi$/L*d) + 1)*(Max - min)/2 + min, where in the calculation expression, d indicates a distance (m) from a location of the robot to the predetermined target point, Max indicates a control amount (Hz) when the control circuit starts to control the second drive mechanism in accordance with the deceleration control amount, min indicates the minimum control amount, and L indicates a predetermined distance from the target point.

In the aspect, the deceleration control amount is generated using the arithmetic expression, thus the robot can be smoothly moved to a predetermined target point by S-curve control, and the robot can be stopped at the predetermined target point accurately.

(Embodiments)

Hereinafter, embodiments of the present disclosure will be described with reference to the drawings. It is to be noted that the same symbol is used for the same components in the drawings.

(First Embodiment)

(Entire Configuration)

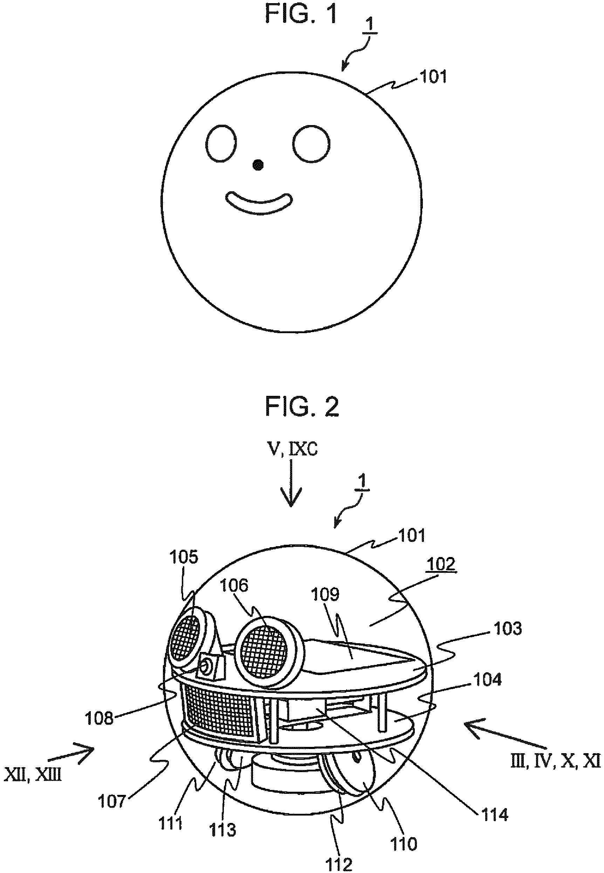

Fig. 1 is an external appearance view of a robot according to a first embodiment of the present disclosure. As illustrated in Fig. 1, the robot 1 includes a spherical body 101. The body 101 includes, for instance, a transparent member or a semi-transparent member.

Fig. 2 is an internal perspective view of the robot 1 according to the first embodiment of the present disclosure.

In Fig. 2, a frame 102 is disposed inwardly of the body 101. The frame 102 includes a first rotating plate 103 and a second rotating plate 104. The first rotating plate 103 is located above the second rotating plate 104. The first rotating plate 103 and the second rotating plate 104 correspond to an example of a base.

As illustrated in Fig. 2, a first display 105 and a second display 106 are provided on the upper surface of the first rotating plate 103. Also, the third display 107 is provided on the upper surface of the second rotating plate 104. The first display 105, the second display 106, and the third display 107 are comprised of, for instance, multiple light emitting diodes. The first display 105, the second display 106, and the third display 107 display information for display on the facial expression of the robot 1. Specifically, as illustrated in Fig. 1, the first display 105, the second display 106, and the third display 107 display part of the face of the robot 1, for instance, the eyes and mouth by individually controlling the lighting of the multiple light emitting diodes. In the example of Fig. 1, the first display 105 displays an image of the left eye as seen from the front of the robot 1, the second display 106 displays an image of the right eye as seen from the front of the robot 1, and the third display 107 displays an image of the mouth. The images of the left eye, the right eye, and the mouth are projected to the outside through the body 101 composed of a transparent or semi-transparent member.

As illustrated in Fig. 2, a camera 108 is provided on the upper surface of the first rotating plate 103. The camera 108 obtains an image of the surrounding environment of the robot 1. As illustrated in Fig. 1, the camera 108 constitutes part of the face of the robot 1, for instance, the nose. Thus, the optical axis of the camera 108 faces forward of the robot 1. Therefore, the camera 108 can capture an object to be recognized in front of the camera 108.

As illustrated in Fig. 2, a control circuit 109 is provided on the upper surface of the first rotating plate 103. The control circuit 109 controls various operations of the robot 1. The details of the control circuit 109 will be described later.

A first drive wheel 110 and a second drive wheel 111 are each provided under the lower surface of the second rotating plate 104, and are in contact with the inner circumferential surface of the body 101. Also, the first drive wheel 110 has a first motor 112 that drives the first drive wheel 110. Similarly, the second drive wheel 111 has a second motor 113 that drives the second drive wheel 111. In other words, the first drive wheel 110 and the second drive wheel 111 are driven by independent separate motors. The details of the operation of the robot 1 driven by the first drive wheel 110 and the second drive wheel 111 will be described later. The first drive wheel 110 and the second drive wheel 111 form body drive wheels.

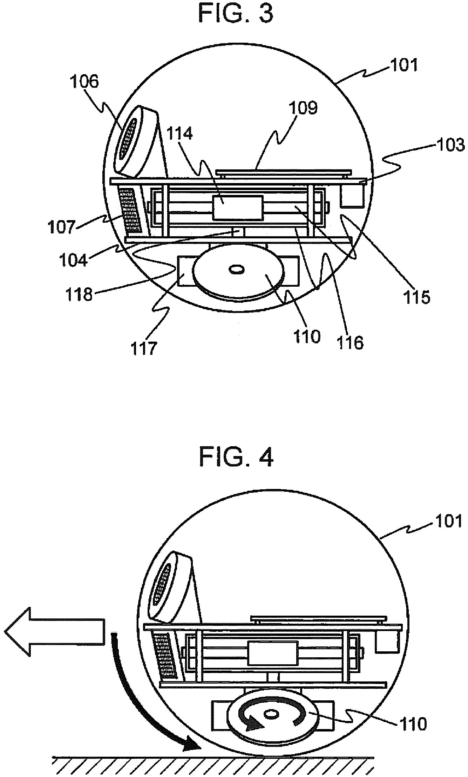

Fig. 3 is an internal side view in III direction of Fig. 2 of the robot 1 according to the first embodiment of the present disclosure.

In Fig. 3, a counterweight (weight) 114 is provided between the first rotating plate 103 and the second rotating plate 104. The counterweight (weight) 114 is located slightly below the center of the body 101. For this reason, the center of gravity of the robot 1 is located below the center of the body 101. Thus, the operation of the robot 1 can be stabilized. III direction indicates a viewing direction from the left to the lateral face of the robot 1 as viewed from the back to the front.

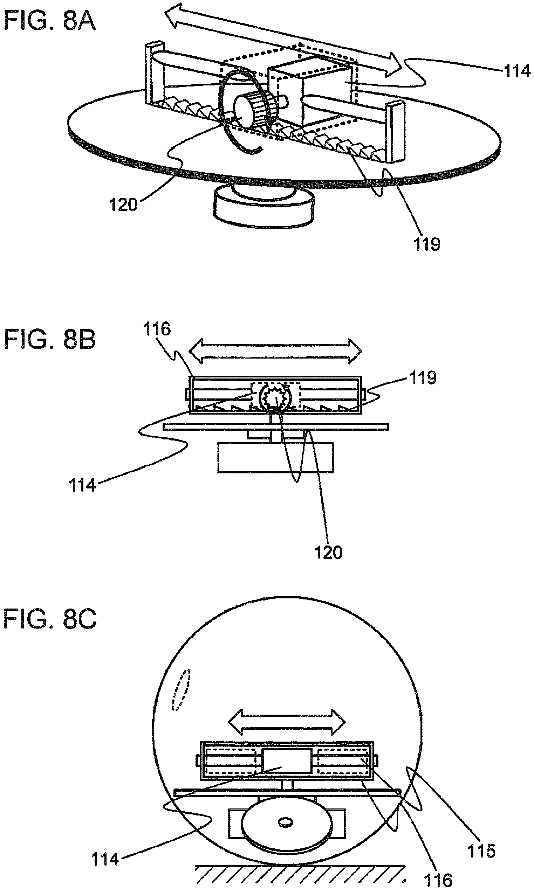

As illustrated in Fig. 3, as a mechanism to drive the counterweight (weight) 114, the robot 1 includes a guide shaft 115 that regulates the movement direction of the counterweight (weight) 114, a swing arm 116 that regulates the location of the rotational direction of the counterweight (weight) 114, a motor 117 for rotation to rotate the swing arm 116, a rotating shaft 118 that connects the swing arm 116 and the motor 117 for rotation, a belt 119 (Fig. 8A and Fig. 8B) used for driving the counterweight (weight) 114, a motor pulley 120 (Fig. 8A and Fig. 8B) in contact with the belt 119, and a motor for weight drive (not illustrated) to rotate the motor pulley 120. In the aspect, the motor for weight drive is built in the counterweight (weight) 114. The details of the operation of the robot 1 driven by the counterweight (weight)

6

114 will be described later.

The rotating shaft 118 extends in a perpendicular direction to the drive axis of the first drive wheel 110 and the second drive wheel 111. The rotating shaft 118 corresponds to an example of a shaft provided in the frame 102. The first drive wheel 110 and the second drive wheel 111 are mounted so as to be spaced apart from the ground in front view. In this case, the drive axis of the first drive wheel 110 and the second drive wheel 111 is a virtual axis line that connects the centers of the first drive wheel 110 and the second drive wheel 111, for instance. When the first drive wheel 110 and the second drive wheel 111 are mounted in parallel in front view, the drive axis of the first drive wheel 110 and the second drive wheel 111 provides the actual drive shaft.

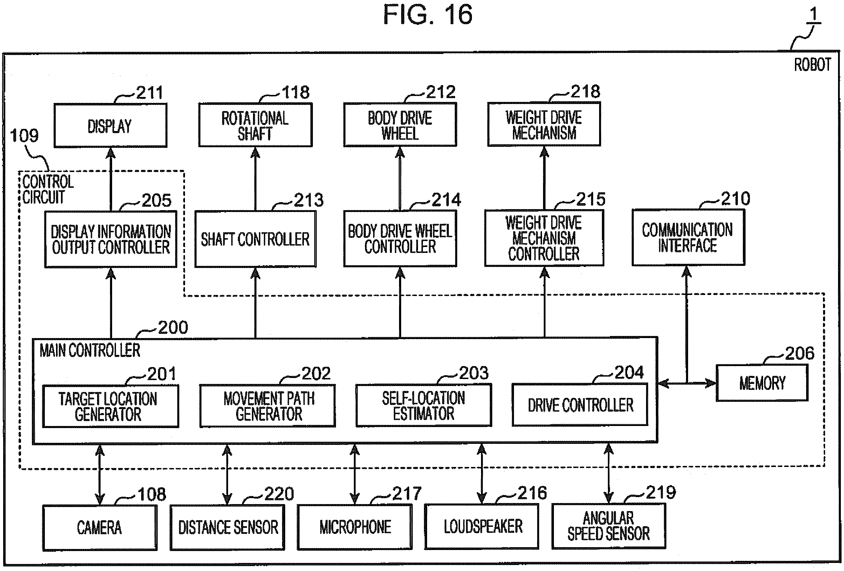

The robot 1 further includes a power source (not illustrated) and a microphone 217 (Fig. 16). The robot 1 is charged by a charger which is not illustrated. The microphone 217 obtains the voice of the surrounding environment of the robot 1.

Next, the operation of the robot 1 using the first drive wheel 110 and the second drive wheel 111 will be described with reference to Figs. 4 to 6.

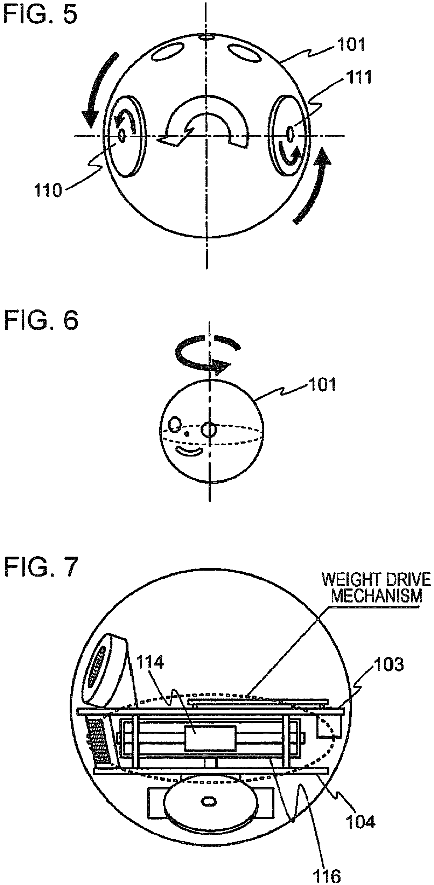

Fig. 4 is a side view in IV direction of Fig. 2, illustrating a rectilinear motion of the robot 1 according to the first embodiment of the present disclosure. Fig. 5 is a plan view in V direction of Fig. 2, illustrating a rotational motion of the robot 1 according to the first embodiment of the present disclosure. Fig. 6 is a perspective view illustrating a rotational motion of the robot 1 according to the first embodiment of the present disclosure. V direction indicates the direction of viewing the robot 1 from above to below.

As illustrated in Fig. 4, when the first drive wheel 110 and the second drive wheel 111 are rotated in the forward direction (the counterclockwise direction around the drive axis as viewed in IV direction), the body 101 is rotated in the forward direction (the counterclockwise direction as viewed in IV direction) by a rotational force. Thus, the robot 1 moves forward. Conversely, when the first drive wheel 110 and the second drive wheel 111 are rotated in the rearward direction of (the clockwise direction around the drive axis as viewed in IV direction), the robot 1 moves rearward.

As illustrated in Figs. 5 and 6, when the first drive wheel 110 and the second drive wheel 111 are rotated in mutually opposite directions, a force of the rotation causes the body 101 to perform rotational motion around the vertical axis which passes through the center of the body 101. In short, the robot 1 rotates in a counterclockwise direction or a clockwise direction in the current place. The robot 1 moves by such forward, rearward, or rotational motion.

Next, the basic operation of the robot 1 using the counterweight (weight) 114 will be described with reference to Figs. 7 to 9C.

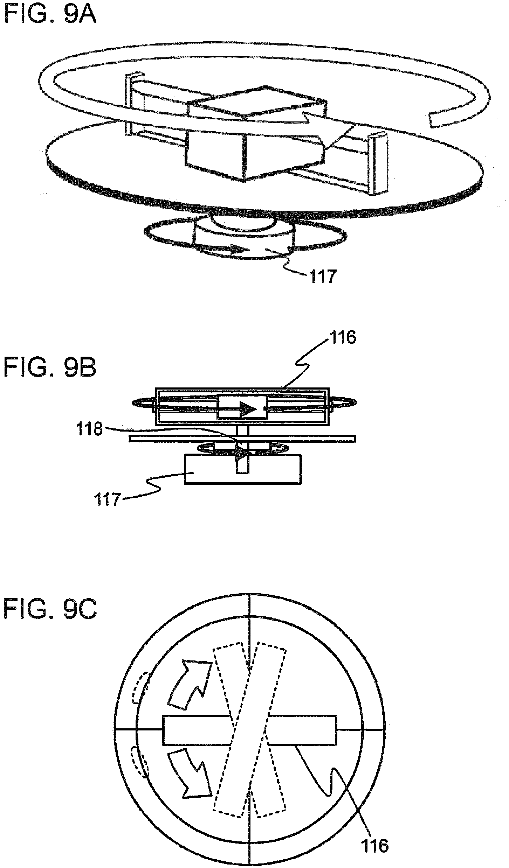

Fig. 7 is an illustration depicting the drive mechanism of the counterweight (weight) in the side view of Fig. 3. Fig. 8A is a perspective view illustrating the operation of the drive mechanism of the counterweight (weight) 114 when the counterweight (weight) 114 is driven in a predetermined linear direction. Fig. 8B is a side view illustrating the operation of the drive mechanism of the counterweight (weight) 114 when the counterweight (weight) 114 is driven in a predetermined linear direction. Fig. 8C is a side view illustrating a state where the counterweight (weight) 114 reciprocates in a predetermined linear direction in the side view of Fig. 3. Fig. 9A is a perspective view illustrating the operation of the drive mechanism of the counterweight (weight) 114 when the swing arm 116 is rotated. Fig. 9B is a side view illustrating the operation of the drive mechanism of the counterweight (weight) 114 when the swing arm 116 is rotated. Fig. 9C is a plan view in IXC direction of Fig. 2, illustrating a state where the swing arm 116 of the robot 1 according to the first embodiment of the present disclosure is rotated.

As illustrated in Fig. 7, the central location of the swing arm 116 is the default position of the counterweight (weight) 114. When the counterweight (weight) 114 is located at the center of the swing arm 116, the first rotating plate 103 and the second rotating plate 104 are substantially parallel to the moving surface, for instance, the eyes, the nose, and the mouth included in the face of the robot 1 face in the default direction.

As illustrated in Figs. 8A and 8B, a motor for weight drive (not illustrated) built in the counterweight (weight) 114 rotates the motor pulley 120 which is connected to the motor for weight drive. The rotated motor pulley 120 rolls on the belt 119, and thus the counterweight (weight) 114 moves inside the swing arm 116. The counterweight (weight) 114 reciprocates in a linear direction in the swing arm 116 by changing the rotational direction of the motor pulley 120, that is, the driving direction of the motor for weight drive.

As illustrated in Fig. 8C, the counterweight (weight) 114 reciprocates in a linear direction in the swing arm 116 along the guide shaft 115.

As illustrated in Figs. 9A and 9B, the motor 117 for rotation rotates the rotating shaft 118, thereby rotating the swing arm 116 connected to the rotating shaft 118 (Fig. 3).

As illustrated in Fig. 9C, the swing arm 116 can rotate in either direction of a clockwise rotation or a counterclockwise rotation.

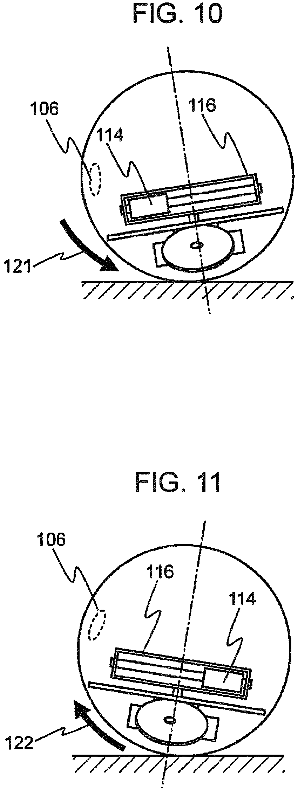

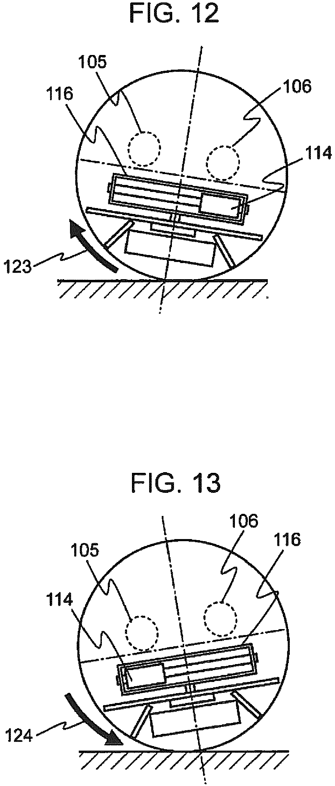

The details of the operation of the robot 1 using the counterweight (weight) 114 will be described with reference to Figs. 10 to 13. Fig. 10 is a side view in X direction of Fig. 2, illustrating the posture of the robot 1 when the counterweight (weight) 114 is located forward. Fig. 11 is a side view in XI direction of Fig. 2, illustrating the posture of the robot 1 when the counterweight (weight) 114 is located rearward. Fig. 12 is a front view in XII direction of Fig. 2, illustrating the posture of the robot 1 when the counterweight (weight) 114 is located rightward. Fig. 13 is a front view in XIII direction of Fig. 2, illustrating the posture of the robot 1 when the counterweight (weight) 114 is located leftward. XIII direction indicates the direction of viewing the robot 1 from the front to the rear.

As illustrated in Fig. 10, when the counterweight (weight) 114 is moved from the default position to one end (the left end in Fig. 10) of the swing arm 116, that is, the counterweight 114 is moved forward with the swing arm 116 perpendicular to the front face of the robot 1, the robot 1 is inclined forward in the pitch direction as indicated by an arrow 121. Also, as illustrated in Fig. 11, when the counterweight (weight) 114 is moved from the default position to the other end (the right end in Fig. 11) of the swing arm 116, that is, the counterweight 114 is moved rearward with the swing arm 116 perpendicular to the front face of the robot 1, the robot 1 is inclined rearward in the pitch direction as indicated by an arrow 122. Thus, when the counterweight (weight) 114 is caused to reciprocate between the one end and the other end in the swing arm 116 with the swing arm 116 perpendicular to the front face of the robot 1, the robot 1 reciprocates in which the robot 1 is forwardly inclined in the pitch direction indicated by the arrow 121 or rearwardly inclined in the pitch direction indicated by the arrow 122. In short, the robot 1 swings in a pitch direction within a predetermined pitch angle range.

As described above, the first display 105, the second display 106, and the third display 107 represent part of the face of the robot 1, for example, the eyes and the mouth. Thus, for instance, a breathlessness state or a sleepy state of the robot 1 can be expressed by causing the robot 1 to reciprocate using the counterweight 114, in which the robot 1 is forwardly inclined in the pitch direction or rearwardly inclined in the pitch direction. If this control is performed, for instance, when the remaining amount of power of a power source is less than or equal to a predetermined value, the robot 1 can naturally inform a user that the remaining amount of power of the power source is small without displaying information on the remaining amount of power, irrelevant to the face on the first display 105, the second display 106, and the third display 107.

As illustrated in Fig. 12, when the counterweight (weight) 114 is moved from the default position to one end (the right end of Fig. 12) of the swing arm 116, that is, the counterweight 114 is moved rightward with the swing arm 116 parallel to the front face of the robot 1, the robot 1 is inclined rightward (the clockwise direction as viewed from the front) as indicated by an arrow 123. Also, as illustrated in Fig. 13, when the counterweight (weight) 114 is moved from the default position to the other end (the left end of Fig. 13) of the swing arm 116, that is, the counterweight 114 is moved leftward with the swing arm 116 parallel to the front face of the robot 1, the robot 1 is inclined leftward (the counterclockwise direction as viewed from the front) as indicated by an arrow 124. Thus, when the counterweight (weight) 114 is caused to reciprocate between the one end and the other end in the swing arm 116 with the swing arm 116 parallel to the front face of the robot 1, the robot 1 reciprocates in which the robot 1 is rightwardly inclined indicated by the arrow 123 or leftwardly inclined indicated by the arrow 124. In short, the robot 1 swings in a horizontal direction at a predetermined angle.

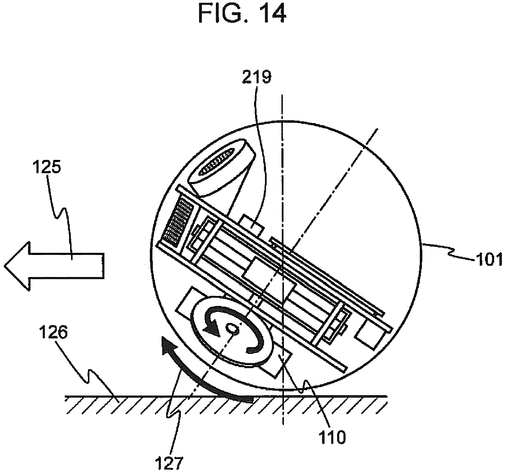

Next, the posture of the robot 1 at the start of movement will be described with reference to Fig. 14.

Fig. 14 is a view illustrating the posture of the robot 1 until the body 101 starts to rotate in a forward direction indicated by an arrow 125. When the force generated by rotating the first drive wheel 110 and the second drive wheel 111 in the arrow direction illustrated in the first drive wheel 110 is greater than a force due to an external factor such as friction of a floor surface 126, the body 101 starts to move forward in the forward direction indicated by the arrow 125. Also, when the force generated by driving the first drive wheel 110 and the second drive wheel 111 is less than a force due to an external factor such as friction of the floor surface 126, the body 101 does not start to move forward. In this case, the body 101 is in a fixed state, and thus the first drive wheel 110 and the second drive wheel 111 rotate with the internal mechanism along the inner side of the body 101 in the direction (the clockwise direction as viewed in III direction) indicated by an arrow 127.

Thus, the pitch angle of the frame 102 including the first display 105 and the second display 106 increases by the effect of a force due to an external factor during a period until the robot 1 starts to move. Here, an angular speed sensor 219 is mounted, for instance, on the upper surface of the first rotating plate 103 in the frame 102. Therefore, the angular speed sensor 219 can detect an angular speed in the pitch direction of the frame 102. Consequently, the pitch angle of the frame 102 is detected by accumulating the angular speed in the pitch direction detected by the angular speed sensor 219.

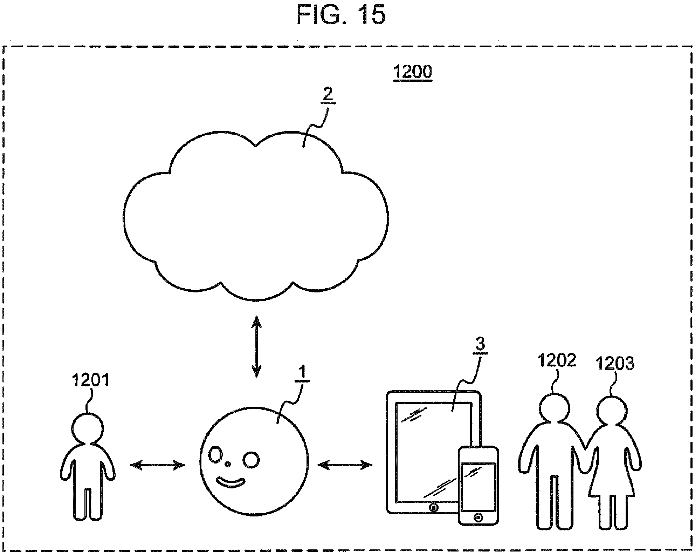

Fig. 15 is an illustration depicting an example of an entire configuration of a robot system 1200 which uses the robot 1 according to the first embodiment of the present disclosure. The robot system 1200 includes a cloud server 2, a mobile terminal 3, and the robot 1. The robot 1 is connected to the Internet, for instance, via communication of Wi-Fi (registered trademark), and is connected to the cloud server 2. Also, the robot 1 is connected to the mobile terminal 3 via communication of Wi-Fi (registered trademark). A user 1201 is, for instance, a child and users 1202 and 1203 are, for instance, the parents of the child.

For instance, application which cooperates with the robot 1 is installed in the mobile terminal 3. The mobile terminal 3 is capable of giving various instructions to the robot 1 via the application and displaying a result of image recognition of an object presented in front of the robot 1 by the user 1201.

For instance, when a request of reading aloud a picture book for the child is received from the mobile terminal 3, the robot 1 starts to read aloud the picture book for the child. For instance, when receiving a question from the child while reading aloud the picture book, the robot 1 sends the question to the cloud server 2, receives an answer for the question from the cloud server 2, and utters a voice indicating the answer.

Like this, the user 1201 can treat the robot 1 like a pet, and the child can learn language through interaction with the robot 1.

Next, the details of the internal circuit of the robot 1 according to the first embodiment of the present disclosure will be described with reference to Fig. 16. Fig. 16 is a block diagram illustrating the robot 1 according to the first embodiment of the present disclosure.

As illustrated in Fig. 16, the robot 1 includes a control circuit 109, a display 211, a shaft controller 213, a rotating shaft 118, a body drive wheel controller 214, a body drive wheel 212, a weight drive mechanism controller 215, a weight drive mechanism 218, an angular speed sensor 219, a distance sensor 220, a camera 108, a microphone 217, a loudspeaker 216, and a communicator 210.

The control circuit 109 includes a memory 206, a main controller 200 including a processor such as a CPU, a display information output controller 205, and a computer including a timer (not illustrated) that measures time.

The memory 206 is comprised of, for instance, a nonvolatile rewritable storage, and stores a control program for the robot 1.

The main controller 200 executes the control program for the robot 1 stored in the memory 206. Thus, the main controller 200 serves as a target location generator 201, a movement path generator 202, a self-location estimator 203, and a drive controller 204.

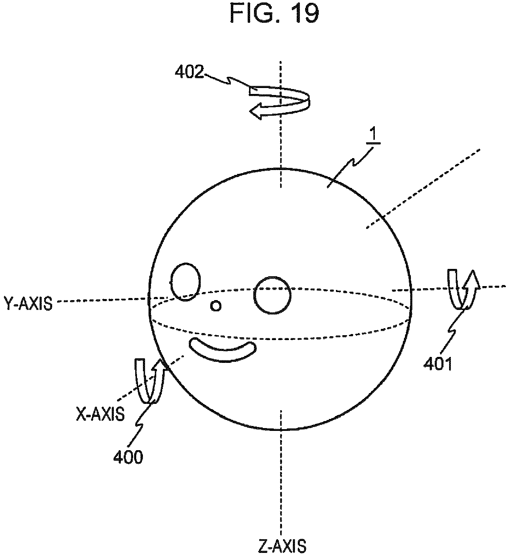

The angular speed sensor 219 is mounted, for instance, on the upper surface of the first rotating plate 103. The angular speed sensor 219 detects an angular speed around each of three directional axes: the directional axis parallel to the direction of gravitational force (the directional axis parallel to the Z-axis illustrated in Fig. 19), the directional axis (the directional axis parallel to the X-axis illustrated in Fig. 19) obtained by projecting the moving direction, of the body 101, parallel to the moving surface of the body 101 onto the horizontal plane perpendicular to the direction of gravitational force, and the directional axis perpendicular to the above-mentioned two directions (the directional axis parallel to the Y-axis illustrated in Fig. 19). The angular speed sensor 219 then outputs the angular speed around each directional axis to the main controller 200. In other words, the angular speed sensor 219 detects an angular speed around the Z-axis (angular speed in a yaw direction), an angular speed around the X-axis (angular speed in a roll direction), and an angular speed around the Y-axis (angular speed in a pitch direction). The drive controller 204 of the main controller 200 accumulates the three angular speeds detected by the angular speed sensor 219 to store the three angular speeds in the memory 206, and manages the yaw angle, the roll angle, and the pitch angle of the frame 102. The angular speed sensor 219 may be mounted on the lower surface of the first rotating plate 103 or the upper surface or the lower surface of the second rotating plate 104 without being limited to the upper surface of the first rotating plate 103. The Y-axis is an example of the horizontal direction perpendicular to the moving direction (X-axis) of the frame 102.

The distance sensor 220 is comprised of a distance sensor that obtains distance information indicating distance distribution in the surroundings of the robot 1 by using infrared light or ultrasonic waves, for instance. Similarly to the camera 108, the distance sensor 220 is provided in the forward direction of the robot 1 on the first rotating plate 103. For this reason, the direction of distance information obtained by the distance sensor 220 matches the direction of an object ahead of the robot 1. Thus, the distance sensor 220 can detect the distance between an object located ahead of the robot 1 and the robot 1. The distance sensor 220 may be disposed at any position as long as the position does not interfere with distance measurement performed by the distance sensor 220, such as a front position on the lower surface of the first rotating plate 103 or a front position on the upper surface or the lower surface of the second rotating plate 104 without being limited to a front position on the upper surface of the first rotating plate 103.

The microphone 217 is provided in the frame 102 to convert sound into an electrical signal, and output the electrical signal to the main controller 200. The microphone 217 may be mounted, for instance, on the upper surface of the first rotating plate 103, or mounted on the upper surface of the second rotating plate 104. The main controller 200 recognizes the presence or absence of the voice of a user from the voice obtained by the microphone 217, accumulates voice recognition results in the memory 206, and manages the voice recognition results. The main controller 200 compares the data for voice recognition stored in the memory 206 with the obtained voice, and recognizes the contents of voice and a user who has uttered the voice.

The loudspeaker 216 is provided in the frame 102 so that the output face faces the front, and converts an audio electrical signal into physical vibration. The main controller 200 outputs predetermined voice from the loudspeaker 216, and causes the robot 1 to utter the voice.

As described with reference to Fig. 2, the camera 108 captures an image ahead (in the Y direction) of the robot 1, and outputs the image captured (hereinafter referred to as the captured image) to the main controller 200. The main controller 200 recognizes the presence or absence of the face, the location, and the size of a user based on the captured image obtained from the camera 108, accumulates face recognition results in the memory 206, and manages the face recognition results.

The main controller 200 generates a command based on the information on the voice recognition results, the face recognition results, the distance information of the surrounding environment, the angular speeds around the three axes, and the communicator 210, and outputs the command to the display information output controller 205, the shaft controller 213, the body drive wheel controller 214, the weight drive mechanism controller 215, and the communicator 210.

The display information output controller 205 displays on the display 211 display information on the facial expression of the robot 1 according to a command outputted from the main controller 200. The display 211 includes the first display 105, the second display 106, and the third display 107 which have been described with reference to Fig. 2.

The shaft controller 213 rotates the rotating shaft 118 which has been described with reference to Figs. 9A and 9B, according to a command transmitted from the main controller 200. The shaft controller 213 includes the motor 117 for rotation which has been described with reference to Figs. 9A and 9B.

The body drive wheel controller 214 causes the body drive wheel 212 of the robot 1 to operate according to a command transmitted from the main controller 200. The body drive wheel controller 214 includes the first motor 112 and the second motor 113 which have been described with reference to Fig. 2. The body drive wheel 212 includes the first driving wheel 110 and the second driving wheel 111 which have been described with reference to Fig. 2. The body drive wheel 212 corresponds to an example of a set of drive wheels.

The weight drive mechanism controller 215 causes the weight drive mechanism 218 of the robot 1 to operate according to a command transmitted from the main controller 200. The weight drive mechanism controller 215 includes a motor for weight drive (not illustrated) built in the counterweight 114. The weight drive mechanism 218 includes the guide shaft 115, the swing arm 116, the motor 117 for rotation, the belt 119, and the motor pulley 120 which have been described with reference to Figs. 3, 8A, and 8B.

The communicator 210 is comprised of a communication device for connecting the robot 1 to the cloud server 2 (Fig. 15). For instance, a communication device via a wireless LAN such as Wi-Fi (registered trademark) may be used as the communicator 210, however, this is an example. The communicator 210 communicates with the cloud server 2 according to a command transmitted from the main controller 200.

Next, the target location generator 201, the movement path generator 202, the self-location estimator 203, and the drive controller 204 included in the main controller 200 will be described.

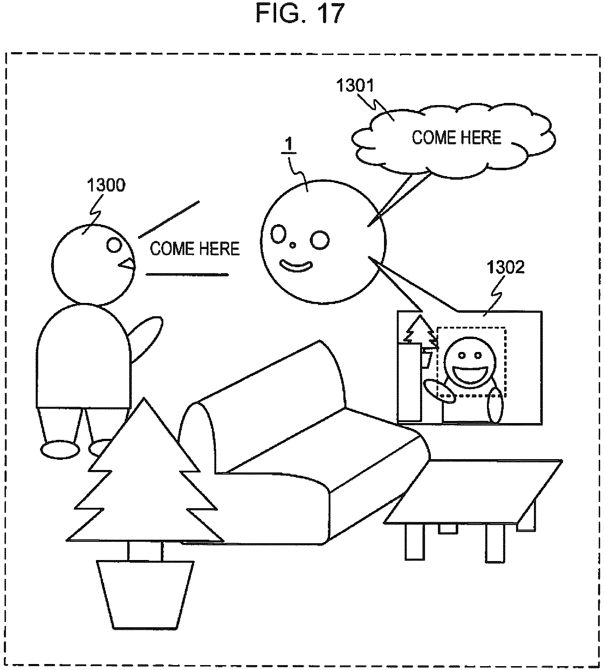

The target location generator 201 will be described with reference to Fig. 17. Fig. 17 is an illustration depicting a space in which the robot 1 according to the embodiment of the present disclosure works, and part of processing performed on the first user 1300 by the robot 1. The target location generator 201 compares the voice of the first user 1300 obtained by the microphone 217 with the voiceprint information (an example of reference voice data) held in the memory 206, and detects the first user 1300. The first user 1300 is a user who has uttered a first keyword to the robot 1. For instance, a phrase such as "come here" may be used as the first keyword, the phrase for calling for the robot 1 to move to the location of the first user 1300.

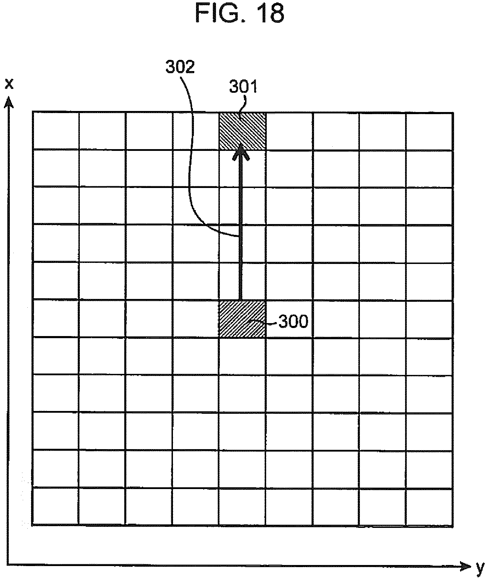

When the first keyword is included in a voice recognition result of the voice uttered by the first user 1300, the target location generator 201 performs location detection processing on the first user 1300. The target location generator 201 compares a captured image 1302 of the camera 108 with face information on the first user 1300 held in the memory 206, and recognizes the face of the first user 1300 in the captured image 1302. After successfully recognizing the face of the first user 1300 in the captured image 1302, the target location generator 201 extracts an area of the first user 1300 in the captured image 1302, and identifies the direction of the first user 1300 with respect to the robot 1 from the extracted area of the first user 1300. The target location generator 201 obtains distance information corresponding to the identified direction from the distance sensor 220, thereby estimating the distance between the robot 1 and the first user 1300. Also, from the estimated direction of the first user 1300 and distance, the target location generator 201 generates a location at which the first user 1300 is present in the real space as a target location 301 (Fig. 18).

The movement path generator 202 generates a movement path for the robot 1 to move to the target location. The movement path generator 202 will be described with reference to Fig. 18. Fig. 18 is a chart illustrating map information, stored in the memory 206, on the surrounding environment of the robot 1. Also, the map information illustrated in Fig. 18 is formed by a two-dimensional coordinate space in which the real space where the robot 1 is present is defined by the X-axis indicating the forward direction of the robot 1 and the Y-axis indicating the right direction of the robot 1 (the right direction when the robot 1 is viewed from the back to the front). The map information is formed of multiple square cells divided into a grid pattern, and each square cell represents each location. A location 300 indicates the current location of the robot 1, and the target location 301 indicates a target location generated by the target location generator 201. The movement path generator 202 determines an optimal movement path for the robot 1 to move to the target location 301 by publicly known processing (for instance, A* algorithm or Dijkstra's algorithm). For instance, the robot 1 follows the movement path like an arrow 302, and arrives at the target location 301. The two-dimensional coordinate space as illustrated in Fig. 18 may be used for the map information held in the memory 206, or a three-dimensional coordinate space further including the Z-axis indicating the height direction may be used for the map information.

The self-location estimator 203 estimates the current position of the robot 1 in the real space at predetermined time intervals using environmental information on the surroundings of the robot 1 or a movement amount of the robot 1. For instance, the self-location estimator 203 refers to captured data obtained by capturing the surroundings by the camera 108, and distance information which indicates the distance to each of objects located in the surroundings of the robot 1 and is detected by the distance sensor 220, and may estimate the current location of the robot 1 using, for instance, visual localization and mapping (V-SLAM). Alternatively, the self-location estimator 203 may estimate the current location of the robot 1 from the surrounding environment or may estimate the current location of the robot 1 by a publicly known method, such as dead reckoning, using the rotational amount of the first motor 112 and the second motor 113 obtainable from the body drive wheel controller 214, and an angular speed (angular speed in the yaw angle), obtainable from the angular speed sensor 219, around the directional axis (Z-axis) parallel to the direction of gravitational force of the robot 1.

The self-location estimator 203 sets the estimated current location of the robot 1 in the map information held in the memory 206. For instance, as illustrated in Fig. 18, the location 300 which indicates the current location of the robot 1 is updated as needed by the self-location estimator 203.

The drive controller 204 determines a control amount to be outputted as a command to each of the shaft controller 213, the body drive wheel controller 214, and the weight drive mechanism controller 215, and a control command that controls the display information output controller 205. The control amount includes a control amount C1 that controls the first motor 112 and the second motor 113 included in the body drive wheel controller 214, a control amount C2 that controls a motor for weight drive (not illustrated) included in the weight drive mechanism controller 215, and a control amount C3 that controls the motor 117 for rotation included in the shaft controller 213.

The control amount C1 is a value that controls the rotational amount of each of the first motor 112 and the second motor 113 included in the body drive wheel controller 214, and the torque and the rotational speed of the first motor 112 and the second motor 113 increase as the value increases. In this embodiment, the first motor 112 and the second motor 113 are comprised of a motor on which PFM control is performed, and thus the frequency for determining the torque and the rotational speed of the first motor 112 and the second motor 113 is used as the control amount C1. However, this is an example, and when the first motor 112 and the second motor 113 are comprised of a motor on which PWM control is performed, the duty value is used as the control amount C1. The motor 117 for rotation (Fig. 3) of which the shaft controller 213 is comprised and the motor for weight drive (not illustrated) of which the weight drive mechanism 218 is comprised are each comprised of a servo motor, for instance. Thus, the control amount C2 and the control amount C3 are each a command for causing the servo motor to rotate by a specified angle.

The control command is a command for changing the facial expression pattern of the robot 1. Therefore, when changing the facial expression pattern of the robot 1, the drive controller 204 outputs the control command to the display information output controller 205.

Next, the details of the processing performed by the drive controller 204 will be described. The drive controller 204 estimates an effect received by the robot 1 from the floor surface, and determines a control amount to be outputted to each of the display information output controller 205, the shaft controller 213, the body drive wheel controller 214, the weight drive mechanism controller 215, and the communicator 210.

First, an overview of floor surface detection processing performed by the robot 1 according to the first embodiment of the present disclosure will be described with reference to Figs. 14, 19, 20, and 24. The drive controller 204 estimates the type of floor surface on which the robot 1 moves, based on the posture of the robot 1 which changes in the period from reception of a movement start command by the robot 1 until the robot 1 actually starts to move.

Fig. 19 is an illustration depicting two axes (Y-axis, Z-axis) intersecting perpendicularly to X-axis which is defined as the forward direction of the robot 1 in a three-dimensional space. For rotation of the robot 1, a rotational angle around the X-axis, a rotational angle around the Y-axis, and a rotational angle around the Z-axis are called a roll angle (corresponding to an arrow 400), a pitch angle (corresponding to an arrow 401), and a yaw angle (corresponding to an arrow 402), respectively.

As described above, the posture of the robot 1 according to the first embodiment of the present disclosure rotates around the Y-axis in the period from reception of a movement start command by the robot 1 until the robot 1 actually starts to move. In the period, the angular speed sensor 219 obtains an angular speed in the direction indicated by the arrow 401 (Fig. 19). As described above, the obtained angular speed is accumulated and stored in the memory 206, and pitch angles of the frame 102 are managed.

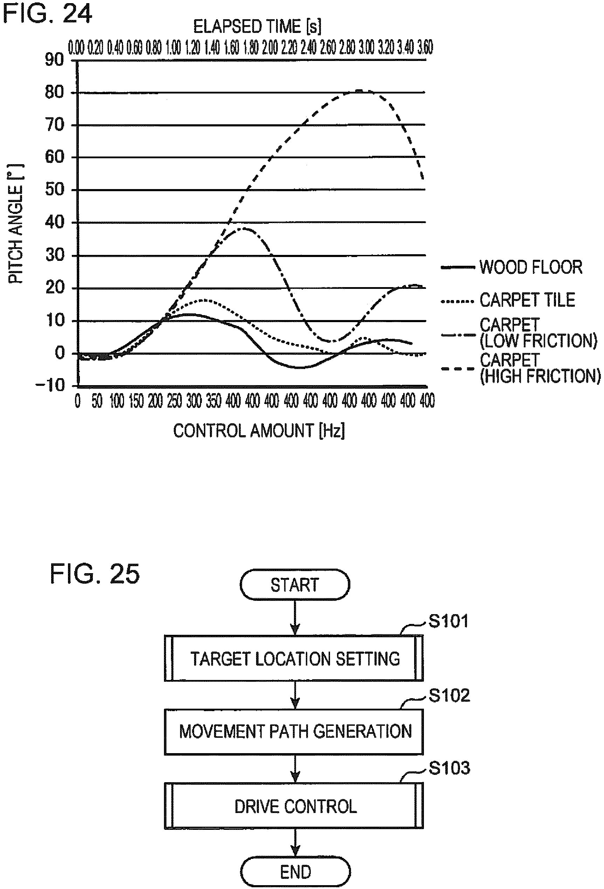

Fig. 24 is a graph illustrating a change in pitch angle for each of floor surfaces during the period from reception of a movement start command by the robot 1 until the robot 1 actually starts to move. In the graph illustrated in Fig. 24, the vertical axis indicates pitch angle, and the lower horizontal axis indicates the control amount C1 for the first motor 112 and the second motor 113 that drive the body drive wheel 212. Hereinafter the control amount C1 for the first motor 112 and the second motor 113 is also expressed as the control amount C1 for the body drive wheel 212. The larger the value of the control amount C1 for the body drive wheel 212, the greater force is applied to the floor surface 126 (Fig. 14). Also, since the control amount C1 in Fig. 24 is increased by a certain amount per unit time, the time axis indicating an elapsed time from reception of a movement start command is set as illustrated in the upper portion of the graph illustrated in Fig. 24.

As illustrated in Fig. 24, the posture of the robot 1 at the start of movement changes according to a floor surface. In the robot 1, as illustrated in Fig. 14, the inclination of the internal mechanism such as the frame 102 changes, and thus the center of gravity location of the robot 1 also moves in the forward direction. Referring to Fig. 24, when the total of the force which is changed by the control amount C1 and applied to the floor surface by the body drive wheel 212, and the force applied to the floor surface by the change in the center of gravity location of the robot 1 exceeds the force due to an external factor such as friction received from the floor surface, the robot 1 starts to move. Specifically, the greater the force due to an external factor such as friction received from the floor surface, the larger pitch angle of the internal mechanism such as the frame 102 is generated until the robot 1 starts to move. Also, referring to Fig. 24, when the robot 1 successfully moves, decrease in the pitch angle occurs. In other words, the pitch angle of the internal mechanism such as the frame 102 increases until the robot 1 starts to move, and after the robot 1 starts to move, the pitch angle is going to decrease.

Therefore, it can be concluded that the robot 1 starts to move at the timing of occurrence of decrease in the pitch angle, and thus the type of floor surface can be determined by monitoring the change in the pitch angle. Thus, the drive controller 204 estimates the type of floor surface by determining whether or not a maximum angle of the pitch angle (a maximum pitch angle) exceeds a predetermined value according to a floor surface type. The change in the pitch angle may be monitored in the period until the location 300 of the robot 1 is moved by referring to the map information in the memory 206, or a maximum pitch angle in a predetermined time may be monitored.

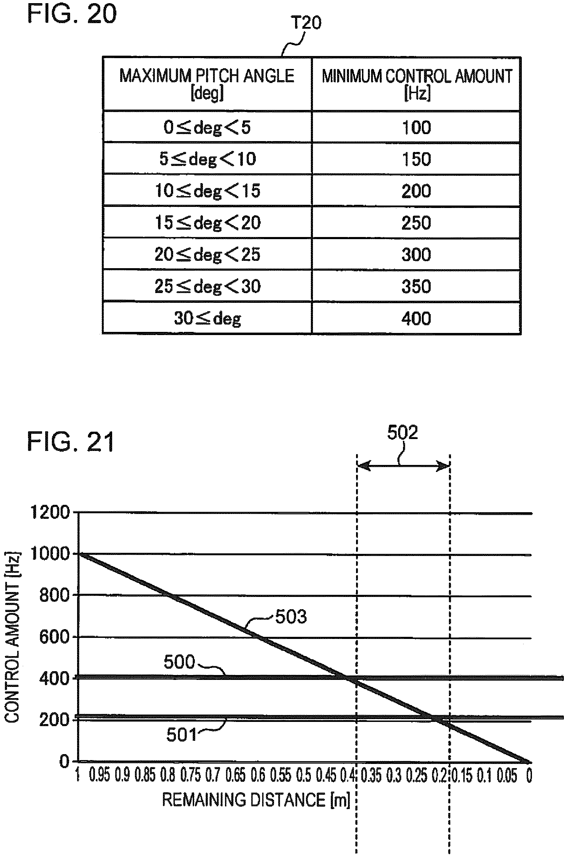

Fig. 20 is a table illustrating an example of the data configuration of a control amount determination database T20 which indicates a relationship between a maximum pitch angle and a minimum control amount according to the type of floor surface. The control amount determination database T20 (an example of correspondence relationship) is a database in which one record is assigned to one type of floor surface, and which stores a maximum pitch angle (deg) and a minimum control amount (Hz) in association with each other for each type of floor surface.

The maximum pitch angle and the minimum control amount illustrated in Fig. 20 are obtained by driving the robot 1 on various floor surfaces in advance. In the robot 1 according to the first embodiment of the present disclosure, the change in the center of gravity location of the robot 1 associated with the change in the pitch angle of the robot 1 has a significant effect of force by the robot 1 on the floor surface. Therefore, without performing complicated arithmetic using a complicated calculation expression, the drive controller 204 can actually move the robot 1 by using the control amount determination database T20 illustrated in Fig. 20. However, this is an example, and the drive controller 204 may determine a minimum control amount by calculating external factors such as friction of the floor surface based on the center of gravity location of the robot 1 and the torque generated by the body drive mechanism 208.

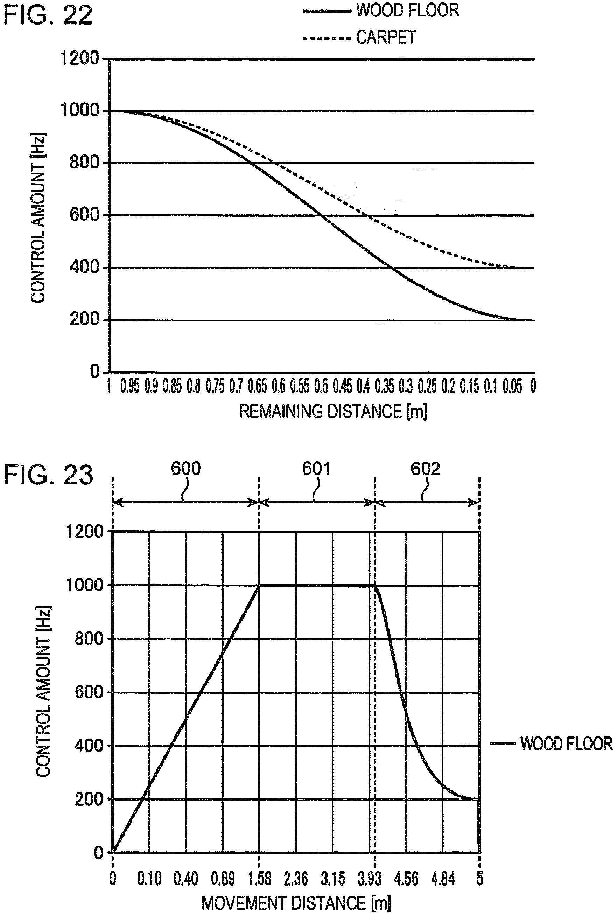

As illustrated in Fig. 23, a significant difference in the maximum value of the pitch angle occurs between the cases where the robot 1 is driven on a floor surface with low friction, such as wood floor and where the robot 1 is driven on a floor surface with high friction, such as shag carpet. Specifically, for instance, under the environment where the property of the floor surface is limited, such as a home environment, it is possible to predict whether the floor surface on which the robot 1 stands is wood floor or carpet from the maximum value of the pitch angle.

Next, the generation processing for the control amount C1 in the robot 1 according to the first embodiment of the present disclosure will be described with reference to Figs. 18, 21, 22, and 23.

The body drive wheel controller 214 causes the body drive wheel 212 of the robot 1 to operate according to the control amount C1 for the body drive wheel 212 transmitted from the main controller 200. The control amount C1 controls the rotational amount of the first motor 112 and the second motor 113. The rotational amount of the first motor 112 and the second motor 113 varies directly with the control amount C1. The body drive wheel controller 214 may obtain the rotational amount of the first motor 112 and the second motor 113 from an encoder attached to the first motor 112 and the second motor 113 or may calculate the rotational amount by a publicly known calculation method according to the specifications of the first motor 112 and the second motor 113.

The control amount C1 varies according to the self-location estimated by the self-location estimator 203 and the remaining distance to a target location generated by the target location generator 201. Here, the control amount C1 is updated as needed not to fall below a minimum control amount corresponding to a maximum pitch angle determined by referring to the control amount determination database T20. Therefore, the robot 1 can arrive at a target location without being stopped in the middle of move due to an external factor of the floor surface.

As illustrated in Fig. 18, the remaining distance to the target location is calculated from the target location 301 generated by the target location generator 201 and the location 300 of the robot 1 updated as needed by the self-location estimator 203. For instance, the remaining distance to the target location 301 is calculated by multiplying the distance per square cell by the number of one or multiple square cells which connect the location 300 of the robot 1 and the target location 301 in the movement path generated by the movement path generator 202. Alternatively, the remaining distance to the target location 301 may be determined by the Euclidean distance between the target location 301 and the location 300.

Here, the reason why the minimum control amount stored in the control amount determination database T20 is to be referred will be described. The robot 1 according to the first embodiment of the present disclosure has a spherical shape as illustrated in Fig. 1. Therefore, when the robot 1 attempts to suddenly stop, the robot 1 may significantly wobble in the forward or backward direction due to an inertial force, and may pass the target location 301. The drive controller 204 moves the robot 1 to the target location 301 by applying trapezoidal control or S-curve control.

Next, the difference between stop locations according to the type of floor surface will be described with reference to Fig. 21. Fig. 21 is a graph illustrating the difference between stop locations according to the type of floor surface on which the robot 1 moves when the control amount C1 is determined by trapezoidal control.

In Fig. 21, the vertical axis indicates the control amount (Hz), and the horizontal axis indicates the remaining distance to the target location. A line 503 indicates temporal change in the control amount C1. As indicated by the line 503, the control amount C1 is decreased by a certain rate of change as the remaining distance decreases. In the graph of Fig. 21, the robot 1 moves on carpet or wood floor according to the control amount C1 indicated by the line 503.

In the case of movement on carpet, when the control amount C1 falls below the value (400 Hz) indicated by a line 500, the robot 1 stops. Also, in the case of movement on wood floor, when the control amount C1 falls below the value (200 Hz) indicated by a line 501, the robot 1 stops because the wood floor has lower friction than that of the carpet.

A distance 502 indicates the difference between the stop location of the robot 1 when the robot 1 is moved on carpet by changing the control amount C1 as indicated by the line 503, and the stop location of the robot 1 when the robot 1 is moved on wood floor by changing the control amount C1 as indicated by the line 503.

The difference between the stop locations indicated by the distance 502 is caused by an external force, such as friction, given by the floor surface to the robot 1. Therefore, the robot 1 needs to maintain the control amount C1 at least the minimum control amount until the robot 1 arrives at the target location. In other words, when the robot 1 is moved on carpet, it is possible to prevent stopping of the robot 1 short of the target location provided that the control amount C1 is maintained at least 400 Hz which is a minimum control amount corresponding to carpet. Also, when the robot 1 is moved on wood floor, it is possible to prevent stopping of the robot 1 short of the target location provided that the control amount C1 is maintained at least 200 Hz which is a minimum control amount corresponding to wood floor. Thus, stopping of the robot 1 short of the target location can be avoided by setting the control amount C1 to at least a minimum control amount according to the type of floor surface, and thus the robot 1 can be smoothly moved to the target location.

The drive controller 204 generates the control amount C1 according to the remaining distance to the target location and the minimum control amount. Even when the type of floor surface is different, the robot 1 performs a similar operation, thus the drive controller 204 determines the control amount C1, for instance, by S-curve control using the following Expression (1).

For the method of calculating the control amount C1, a control method which varies according to floor surface may be used. For instance, when the floor surface is wood, wobbling of the robot 1 may occur in the forward or backward direction at the time of stop because the effect from the floor surface is less. In this case, it is better to set a smaller amount of change in the control amount C1 immediately before stop. Thus, in this embodiment, the control amount C1 is determined using Expression (1). Also, when the floor surface is carpet, wobbling of the robot 1 is unlikely to occur in the forward or backward direction at the time of stop because the effect of friction from the floor surface is large. In this case, the control amount C1 may be determined using trapezoidal control. However, in the following example, the control amount C1 is to be determined by S-curve control of Expression (1) before the robot 1 arrives at the target location regardless of the type of floor surface.

$$\text{The control amount C1} = (\text{SIN}(3 \cdot \pi/2 - \pi/L \cdot d) + 1) \cdot (\text{Max} - \text{min})/2 + \text{min} \quad ...(1)$$

L [m] is the deceleration start distance which is a predetermined distance from a target position for starting deceleration control, d [m] is the remaining distance from the location of the robot 1 to the target location, Max [Hz] is the control amount C1 at the deceleration start location which is the location indicated by deceleration control distance, and min [Hz] is the minimum control amount. Also, the value calculated using the technique described above with reference to Fig. 18 may be used as d[m] which is the distance from the location of the robot 1 to the target location. Also, the value determined by referring to the above-mentioned control amount determination database T20 may be used as min [Hz] which is the minimum control amount. Alternatively, in the aspect, the reduction gear ratio in trapezoidal control may be changed without being limited to Expression (1).

Fig. 22 is a graph illustrating a relationship between a remaining distance to a target location in a range from a deceleration start location to the target location and the control amount C1 when the robot is stopped at a target location using Expression (1) for each of wood floor and carpet. In Fig. 22, the vertical axis indicates the control amount [Hz], and the horizontal axis indicates the remaining distance [m] to the target location.

In the graph, L [m] which is the deceleration start distance from the target location is 1 [m], the control amount C1 at the deceleration start location is 1000 [Hz], the minimum control amount with the floor surface of carpet is 400 [Hz], and the minimum control amount with the floor surface of wood floor is 200 [Hz], and arithmetic results when these values are substituted into Expression (1) are illustrated.

As indicated by the curve of carpet (dotted line) and the curve of wood floor (solid line), it is seen that the control amount C1 is gradually decreased in a sign curve from the deceleration start location at 1 [m] point to the target location at 0 [m] point. Also, for wood floor and carpet, the control amounts C1 at the target location are 200 [Hz] and 400 [Hz], respectively, and each control amount C1 is maintained at least the minimum control amount until the robot 1 arrives at the target location. Therefore, the robot 1 is prevented from stopping short of the target location. In the case of wood floor, when the remaining distance is less than 0.15 [m], the slope of the control amount C1 becomes suddenly gentle, and prevention of wobbling of the robot 1 at the target location is achieved.

Fig. 23 is a graph illustrating a variation in the control amount C1 in the period from start of movement to stop of the robot 1 according to the first embodiment of the present disclosure. In Fig. 23, the vertical axis indicates the control amount [Hz], and the horizontal axis indicates movement distance [m]. Fig. 23 illustrates the change in the control amount C1, for instance when the robot 1 moves 5 m. Three control methods indicated in areas 600, 601, and 602 are applied to the control amount C1 from the start of movement to stop.

The area 600 is an acceleration area. In the area 600, the control amount C1 is an acceleration control amount which is increased with time at a constant rate of change. Specifically, in the area 600, the control amount C1 is increased by trapezoidal control. The area 601 is a uniform speed area. In the area 600, the control amount C1 is a uniform speed control amount which maintains a maximum control amount. The maximum control amount refers to a predetermined control amount C1 corresponding to an upper limit speed of the robot 1. As the upper limit speed, a value is used, which has been determined in advance in consideration of the performance of the first motor 112 and the second motor 113 and the safety of the robot 1 at the time of moving.

The area 602 is a deceleration area. In the area 602, the control amount C1 is a deceleration control amount determined by S-curve control indicated by Expression (1).

When the robot 1 starts to move, the drive controller 204 increases the control amount C1 by trapezoidal control, and when the control amount C1 reaches a maximum control amount (1000 [Hz]), the drive controller 204 maintains the control amount C1 at the maximum control amount. When the robot 1 arrives at the deceleration start location, the drive controller 204 decreases the control amount C1 in accordance with Expression (1). Consequently, the drive controller 204 is capable of causing the robot 1 to quickly arrive at the target location and stopping the robot 1 without wobbling at the target location. In addition, when the control amount C1 reaches the maximum control amount, the drive controller 204 does not increase the control amount C1 any more, thus the safety of the robot 1 can be secured.

When the distance from the movement start location to the target location is short, the robot 1 may arrive at the deceleration start location before the control amount C1 reaches the maximum control amount. In this case, the drive controller 204 may calculate the control amount C1 by substituting the control amount C1 at the deceleration start location into Max of Expression (1). Consequently, the drive controller 204 can cause the robot 1 to stop at the target location smoothly and accurately.

Referring back to Fig. 16, the weight drive mechanism controller 215 causes the weight drive mechanism 218 of the robot 1 to operate according to a control amount C2 outputted from the main controller 200. The control amount C2 controls the rotational amount of the motor for weight drive included in the weight drive mechanism controller 215. The rotational amount of the motor for weight drive is limited by a motion range of the counterweight (weight) 114.

The shaft controller 213 causes the rotating shaft 118 of the robot 1 to operate according to a control amount C3 outputted from the main controller 200. The control amount C3 controls the rotational amount of the motor 117 for rotation.

Hereinafter, processing steps performed by the robot 1 in the first embodiment will be described with reference to Figs. 25 to 27, the processing steps including identifying a user from voice and face, setting the location of the identified user as a target location, and moving to the target location without stopping on the way while grasping the current location of the robot 1. Fig. 25 is a flowchart illustrating the main routine of the robot 1 according to the first embodiment of the present disclosure.

Referring to Fig. 25, the target location generator 201 performs target location setting processing (step S101).

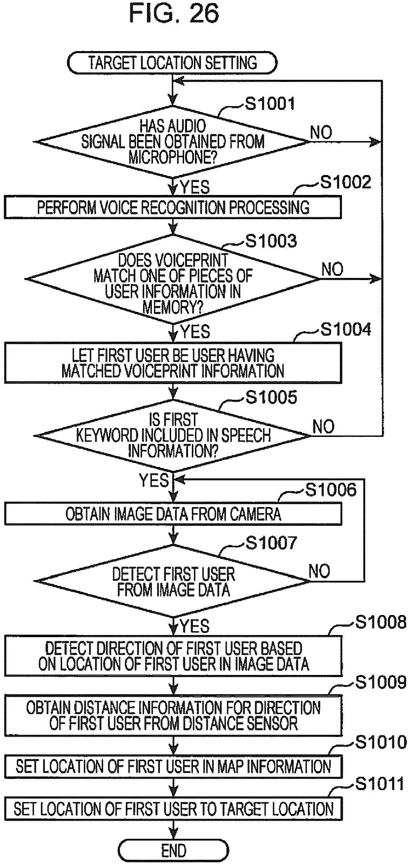

Fig. 26 is a flowchart illustrating the target location setting processing in Fig. 25.

The microphone 217 obtains audio signal in the surrounding environment (Yes in step S1001), and outputs the audio signal to the main controller 200. The main controller 200 performs voice recognition processing on the obtained audio signal (step S1002). The voice recognition processing extracts voice data which indicates a temporal change in the sound pressure of the voice uttered by a user, and utterance information which indicates the contents of utterance of the user contained in the voice data in text format. When an audio signal is not obtained by the microphone 201, the target location generator 201 repeats the processing in step S1001 until an audio signal is obtained (No in step S1001).

The target location generator 201 determines whether or not the voice data extracted by the voice recognition processing matches any one of one or multiple pieces of voiceprint information pre-stored in the memory 206 as user information of one or multiple users. When it is determined that the extracted voice data matches the voiceprint information (Yes in step S1003), the target location generator 201 determines that a user with the matched voiceprint information is the first user 1300 (step S1004). When the extracted voice data does not match any of the pieces of voiceprint information stored in the memory 206 (No in step S1003), the target location generator 201 causes the processing to return to S1001.

When an utterance first keyword is contained in the voice data of the first user 1300 obtained by the voice recognition processing (Yes in step S1005), the target location generator 201 obtains image data from the camera 108 (step S1006). When the first keyword is not contained in the voice data of the first user 1300 obtained by the voice recognition processing (No in step S1005), the target location generator 201 causes the processing to return to S1001.

The target location generator 201 performs face recognition processing to compare each of one or multiple face images contained in the image data obtained from the camera 108 with the characteristic quantity of the face of the first user 1300 stored in the memory 206 as the user information of the first user 1300, and detects the first user 1300 from the image data (step S1007).

When the first user 1300 is detectable from the image data (Yes in step S1007), the target location generator 201 detects the direction of the first user 1300 with respect to the robot 1 from the location of the first user 1300 in the image data (step S1008).

Of the distance information obtained by the distance sensor 220, the target location generator 201 obtains distance information in the direction in which the first user 1300 is present, as the distance information on the first user 1300 (step S1009). The target location generator 201 detects the location of the first user 1300 in the real space around the robot 1 from the direction and the distance information of the first user 1300, and plots the detected location in the map information (Fig. 18) (step S1010).

The target location generator 201 sets the plotted location as the target location 300 of the robot 1 (step S1011). Also, when the first user 1300 is not detectable from the image data (No in step S1007), the target location generator 201 causes the processing to return to S1006.

Next, generation of a movement path for the robot 1 to move to the target location will be described. Referring to Fig. 25, the movement path generator 202 refers to the map information held by the memory 206, and generates the location 300 of the robot 1 and a movement path to the target location 301 (step S102). It is to be noted that the locations of obstacles in the surroundings of the robot 1 are also plotted in the map information based on measuring results of the distance sensor 220. Thus, when an obstacle is present on the movement path between the location 300 of the robot 1 and the target location 301, the movement path generator 202 may generate a movement path which is safe and the shortest, allowing a space at least a predetermined distance between the robot 1 and the obstacle.

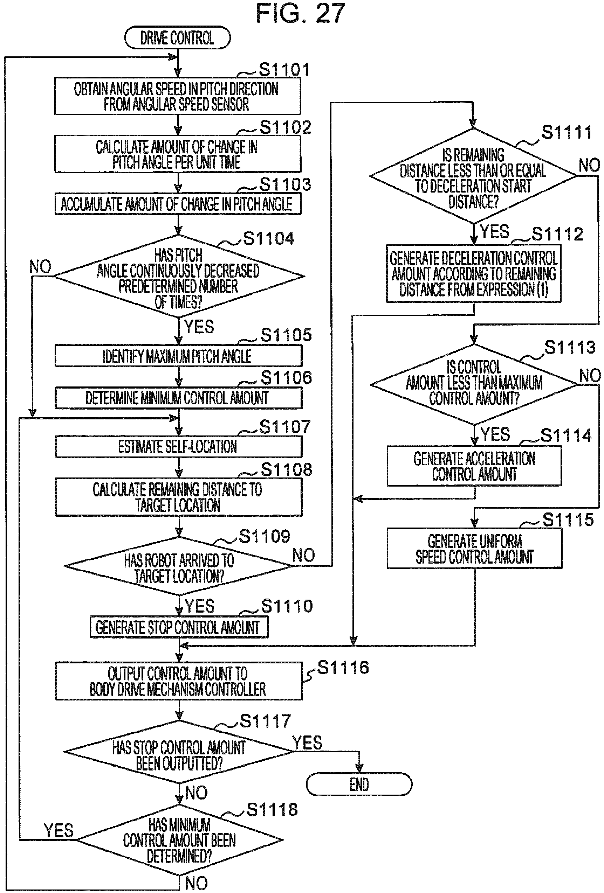

Next, the drive control processing of the robot 1 will be described. Referring to Fig. 25, the drive controller 204 performs the drive control processing (step S103). Fig. 27 is a flowchart illustrating the drive control processing in Fig. 25.

The drive controller 204 obtains an angular speed in the pitch direction detected by the angular speed sensor 219 (step S1101). Next, the drive controller 204 calculates a rate of change in the pitch angle per unit time from the obtained angular speed in the pitch direction (step S1102).

For instance, the angular speed sensor 219 detects an angular speed in the pitch direction at uniform sampling intervals. In this case, the drive controller 204 can calculate an angular speed in the pitch direction at one sample point detected by the angular speed sensor 219 as the rate of change in the pitch angle per unit time. Alternatively, when a time different from the sampling interval is used as the unit time, the drive controller 204 may calculate a rate of change in the pitch angle per unit time by accumulating the angular speeds in the pitch direction at sample points for unit time, detected by the angular speed sensor 219.

Next, the drive controller 204 accumulates rates of change in the pitch direction per unit time (step S1103), and calculates the current pitch angle of the frame 102. Referring to Fig. 14, the angular speed sensor 219 detects an angular speed in the pitch direction, where the angular speed has a positive value, for instance, when the frame 102 rotates in the clockwise direction as viewed in III direction, and has a negative value when the frame 102 rotates in the counterclockwise direction as viewed in III direction. In this case, the drive controller 204 can detect a pitch angle of the frame 102 by simply accumulating the angular speeds in the pitch direction detected by the angular speed sensor 219. It is to be noted that the calculated current pitch angle is stored in the memory 206 in a time series.

When the pitch angle has continuously decreased predetermined number of times (Yes in step S1104), the drive controller 204 identifies a maximum pitch angle from pitch angles stored in the memory 206 in a time series (step S1105). Here, when the pitch angle has continuously decreased predetermined number of times, the drive controller 204 assumes that the pitch angle has reached a peak as illustrated in Fig. 24. For instance, a predetermined value, which allows to assume that the pitch angle has reached a peak, is used as the predetermined number of times.

Next, the drive controller 204 refers to the control amount determination database T20 to determine a minimum control amount corresponding to the identified maximum pitch angle (step S1106).

On the other hand, when the pitch angle has not continuously decreased predetermined number of times (No in step S1104), the drive controller 204 causes the processing to proceed to step S1107 without performing the processing in step S1105 and step S1106.

Next, the self-location estimator 203 estimates the self-location of the robot 1 from the image data obtained by the camera 108 and the distance information obtained by the distance sensor 220 (step S1107). Here, the self-location estimator 203 may estimate the self-location using publicly known V-SLAM.

If the image data obtained by the camera 108 does not sufficiently show a group of characteristic points indicating the objects in the surroundings of the robot 1, the self-location estimator 203 is unable to estimate the self-location using V-SLAM. In this case, the self-location estimator 203 obtains the rotational amounts of the first motor 112 and the second motor 113 from the body drive wheel controller 214 as well as performs publicly known dead reckoning based on the angular speed in the yaw angle detected by the angular speed sensor 219. Specifically, the self-location estimator 203 interpolates the self-location of the robot 1 by dead reckoning during a period from a point at which the self-location is lost by V-SLAM until the self-location is detected again by V-SLAM. Thus, the self-location estimator 203 can recognize the self-location of the robot 1 all the time.

Next, the drive controller 204 refers to the map information stored in the memory 206, and calculates the remaining distance using the coordinates of the location 300 of the robot 1 and the coordinates of the target location 301 (step S1108). The remaining distance is calculated by multiplying the distance per square cell by the number of square cells indicating the movement path that connects the coordinates of the location 300 of the robot 1 and the coordinates of the target location 301.

When the robot 1 has arrived at the target location 301 (Yes in step S1109), the drive controller 204 generates a stop control amount as the control amount C1 (step S1110), and outputs the generated stop control amount to the body drive wheel controller 214 (step S1116). When outputting the stop control amount to the body drive wheel controller 214 (Yes in step S1117), the drive controller 204 terminates the processing. Here, for instance, 0 [Hz] may be used as the stop control amount.

On the other hand, when the robot 1 has not arrived at the target location 301 (No in step S1109), the drive controller 204 determines whether or not the remaining distance from the location 300 of the robot 1 to the target location 301 is less than or equal to the deceleration start distance (step S1111). When the remaining distance is less than or equal to the deceleration start distance (Yes in step S1111), the drive controller 204 generates a deceleration control amount according to the remaining distance using Expression (1) (step S1112), and outputs the generated deceleration control amount as the control amount C1 to the body drive wheel controller 214 (step S1116).

Here, the drive controller 204 substitutes the remaining distance from the location 300 of the robot 1 to the target location 301, the deceleration start distance, the minimum control amount determined in step S1106, and the control amount C1 at the deceleration start location into d, L, min, and MAX, respectively of Expression (1), and generates a deceleration control amount. The deceleration control amount is the control amount C1 generated in the area 602 of Fig. 23.

When the remaining distance from the location 300 of the robot 1 to the target location 301 exceeds the deceleration start distance (No in step S1111), the drive controller 204 determines whether or not the control amount C1 is less than the maximum control amount (step S1113). When the control amount C1 is less than the maximum control amount (Yes in step S1113), the drive controller 204 generates an acceleration control amount as the control amount C1 (step S1114), and outputs the generated acceleration control amount to the body drive wheel controller 214 (step S1116). The acceleration control amount is the control amount C1 generated in the area 600 of Fig. 23. Here, the drive controller 204 may generate an acceleration control amount by increasing the control amount C1 at a constant rate of change as time passes.

When the control amount C1 exceeds the maximum control amount (No in step S1113), the drive controller 204 generates a uniform speed control amount as the control amount C1 (step S1115), and outputs the generated uniform speed control amount to the body drive wheel controller 214 (step S1116). The uniform speed control amount is the control amount C1 generated in the area 601 of Fig. 23.

When the stop control amount has not been outputted to the body drive wheel controller 214 (No in step S1117), the drive controller 204 determines whether or not a minimum control amount has been determined by the processing in step S1106 (step S1118). When a minimum control amount has not been determined (No in step S1118), the drive controller 204 causes the processing to return to step S1101 because the robot 1 has not started to move yet.

On the other hand, when a minimum control amount has been determined (Yes step S1118), the drive controller 204 causes the processing to return to step S1107 because the robot 1 has started to move.

On the other hand, when the stop control amount has been outputted to the body drive wheel controller 214 (Yes in step S1117), the drive controller 204 terminates the processing because the robot 1 has arrived at the target location 301.

Referring to the flowchart of Fig. 27, when the robot 1 has not started to move yet, the loop of No in step S1104, No in step S1009, No in step S1111, Yes in step S1113, No in step S1117, and No in step S1118 is repeated, and the control amount C1 is increased at a constant rate of change. Accordingly, the pitch angle of the frame 102 increases.

Also, during acceleration control after the start of move, the loop of No in step S1109, No in step S1111, Yes in step S1113, No in step S1117, and Yes in step S1118 is repeated, and the robot 1 moves at a constant acceleration.

During uniform speed control, the loop of No in step S1109, No in step S1111, No in step S1113, No in step S1117, and Yes in step S1118 is repeated, and the robot 1 moves at a constant speed.

During deceleration control, the loop of No in step S1109, Yes in step S1111, No in step S1117, and Yes in step S1118 is repeated, and the robot 1 is decelerated in accordance with S-curve control indicated by Expression (1).

As described above, with the robot 1 according to the first embodiment, a minimum control amount corresponding to a maximum pitch angle of the frame 102 detected by the angular speed sensor 219 is determined, and the deceleration control is performed on the robot 1 so that the control amount C1 does not fall below the minimum control amount. Consequently, the robot 1 can be stopped at the target location accurately and smoothly.

(Second Embodiment)

Next, a second embodiment will be described with reference to the drawings. It is to be noted that the same symbol is used for the same components in the drawings. Also, a description of the same component, processing as in the first embodiment is omitted. Even when the type of floor surface changes during movement, the robot 1 according to the second embodiment determines an appropriate minimum control amount according to the type of floor surface after the change, and arrives at the target location of the robot 1 accurately without wobbling.

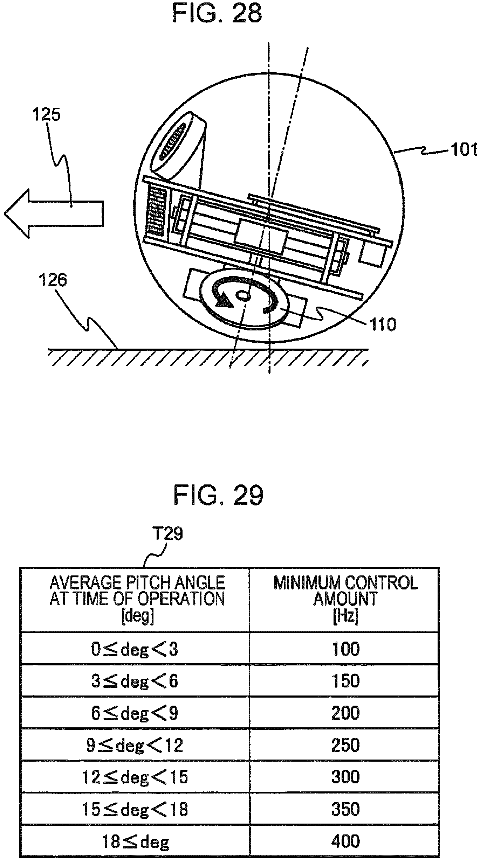

Fig. 28 is an illustration depicting the posture of the robot 1 at the time of moving in the second embodiment of the present disclosure. As described above with reference to Fig. 14, when the force for driving the first drive wheel 110 and the second drive wheel 111 is greater than a force due to an external factor such as friction of the floor surface 126, the robot 1 starts to move in the forward direction indicated by the arrow 125, and at this point, the internal mechanism such as the frame 102 does not return to a horizontal state and receives a force due to an external factor such as dynamic friction of the floor surface 126. Therefore, as illustrated in Fig. 28, the internal mechanism such as the frame 102 moves forward with a pitch angle maintained, which is smaller than a maximum pitch angle immediately before start moving as illustrated in Fig. 14. The pitch angle during the movement varies with material of the floor surface. Thus, when the robot 1 moves from a certain floor surface to a different floor surface at the time of moving, a force due to an external factor such as dynamic friction of the floor surface changes, and thus the pitch angle of the internal mechanism such as the frame 102 changes. For instance, when the robot 1 moves on a floor material with a large friction force, such as carpet, the pitch angle of the internal mechanism such as the frame 102 at the time of moving increases, as compared with when the robot 1 moves on a floor material with a small friction force, such as wood floor.

Also, at the time of moving, the robot 1 wobbles forward or backward in the pitch direction, thus the pitch angle of the internal mechanism such as the frame 102 at the time of moving vibrates with a certain amplitude, for instance. Thus, in the second embodiment, an average pitch angle, which is an average value of pitch angles at the time of moving of the robot 1, is determined, then the type of floor surface is estimated from the average pitch angle, and a minimum control amount is determined.

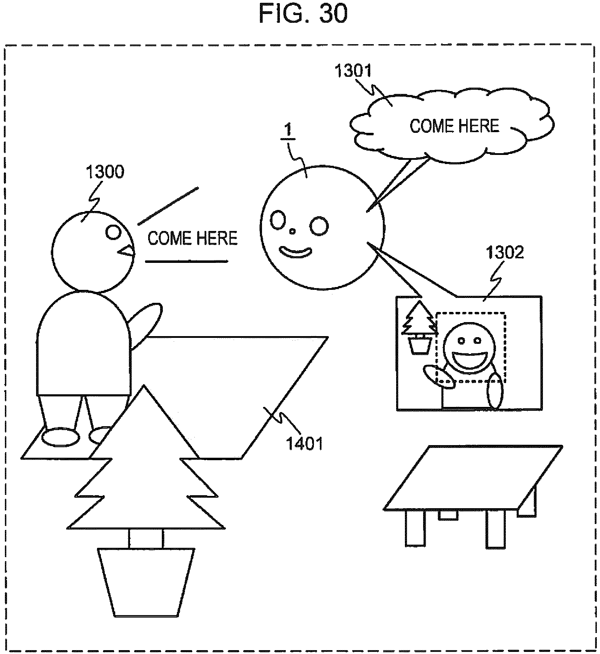

Fig. 30 is an illustration depicting a space in which the robot 1 according to the second embodiment of the present disclosure works, and part of processing performed on the first user 1300 by the robot 1. In Fig. 30, a point of difference from Fig. 17 is that carpet 1401 is laid under the first user 1300. However, the robot 1 is located on wood floor at the movement start location. Thus, when the robot 1 starts to move in response to call of "come here" spoken by the first user 1300, the robot 1 moves on wood floor for a certain period since the start of moving, and moves over the carpet 1401 on the way, and moves to the location of the first user 1300.

Since the frictional force of wood floor is smaller than that of carpet, a smaller minimum control amount is set for wood floor as compared with the case of carpet. Thus, when a minimum control amount of the robot 1 is set to the value for wood floor even after moving over carpet, the control amount C1 becomes insufficient before reaching the first user 1300, and the robot 1 may not be able to arrive at the location of the first user 1300.

In order to prevent this, the second embodiment adopts the following configuration.

Fig. 29 is a table illustrating the data configuration of a control amount determination database T29 in the second embodiment of the present disclosure. In the control amount determination database T29, the difference from the control amount determination database T20 is that instead of the "maximum pitch angle", the "average pitch angle during operation" is used.

The "average pitch angle during operation" specifies a range of an average pitch angle taken by the internal mechanism such as the frame 102 in the robot 1 in movement according to the type of floor surface. When the control amount determination database T29 is compared with the control amount determination database T20, in the control amount determination database T20, for instance, as shown in the first row, a maximum pitch angle is set to "0 degree or greater and 5 degrees or less" for a minimum control amount "100 Hz". In contrast, in the control amount determination database T29, the average pitch angle during operation is set to "0 degree or greater and 3 degrees or less" for a minimum control amount "100 Hz". Similarly, in the second row, a maximum pitch angle is set to "5 degrees or greater and 10 degrees or less" for a minimum control amount "150 Hz" in the control amount determination database T20, whereas the average pitch angle during operation is set to "3 degrees or greater and 6 degrees or less" for a minimum control amount "150 Hz" in the control amount determination database T29.

Like this, in the control amount determination database T29, the pitch angle is set to be overall small for the same minimum control amount as compared with the control amount determination database T20. That is, in the control amount determination database T29, for the same type of floor surface, the pitch angle is set to be small as compared with the control amount determination database T20.

This is because, at the time of moving, the frictional force received by the robot 1 from the floor surface is small, as compared with at the time of stop, thus even for the same type of floor surface, at the time of moving, the pitch angle of the internal mechanism such as the frame 102 is smaller, as compared with at the time of stop.

Thus, in the second embodiment, similarly to the first embodiment, before the robot 1 starts to move, a minimum control amount is determined by referring to the control amount determination database T20, whereas after the robot 1 starts to move, a minimum control amount is determined by referring to the control amount determination database T29. It is to be noted that the maximum pitch angle and the minimum control amount stored in the control amount determination database T20 are an example of the first reference pitch angle and the first control amount, and the average pitch angle during operation and the minimum control amount stored in the control amount determination database T29 are an example of the second reference pitch angle and the second control amount.

Hereinafter, a control method for allowing the robot 1 to arrive at the target location accurately and smoothly by referring to the control amount determination database T29 even when the type of floor surface changes during the movement of the robot 1 will be described.

In the second embodiment, the main routine is the same as in the first embodiment 1, that is, the same as in Fig. 25. In the second embodiment, the details of the drive control processing presented in step S103 illustrated in Fig. 25 is different from the drive control processing in the first embodiment.

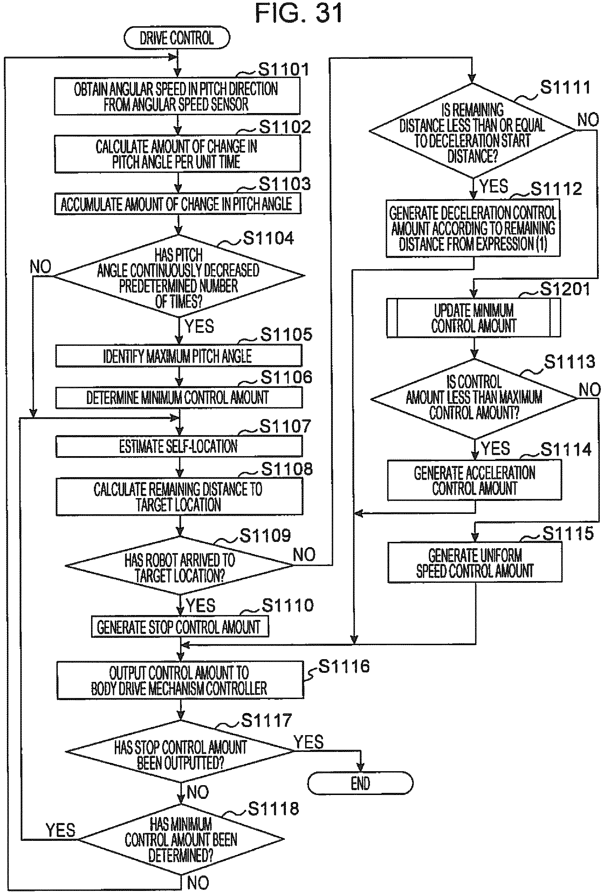

Fig. 31 is a flowchart illustrating drive control processing according to the second embodiment of the present disclosure. In Fig. 31, the same processing as in Fig. 27 is labeled with the same symbol and a description is omitted. In Fig. 31, after No in step S1111, update processing for the minimum control amount in step S1201 is performed.

Determination of No is made in step S1111 when the following conditions are satisfied: the robot 1 has started to move, the robot 1 is moving and the remaining distance to the target location is greater than the deceleration start distance. Therefore, the processing in step S1201 is performed when the robot 1 is moving and the remaining distance to the target location is greater than the deceleration start distance. In other words, the processing in step S1201 is performed when acceleration control indicated by the area 600 of Fig. 23 or uniform speed control indicated by the area 601 of Fig. 23 is applied.

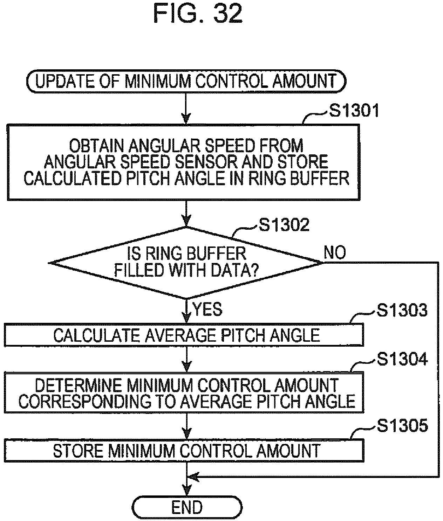

Fig. 32 is a flowchart illustrating the details of update processing for a minimum control amount in step S1201 of Fig. 31.

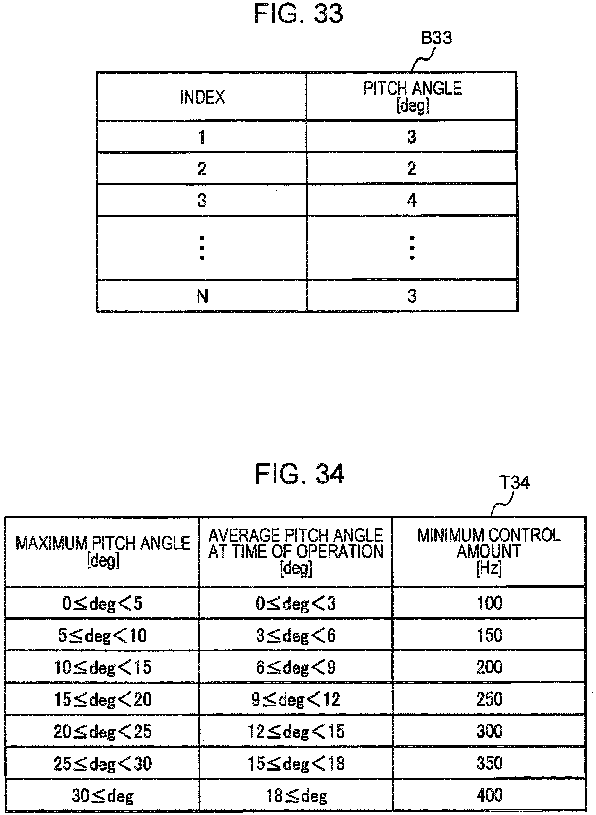

The drive controller 204 obtains an angular speed in the pitch direction detected by the angular speed sensor 219, calculates a pitch angle of the internal mechanism such as the frame 102, and stores the calculated pitch angle in the ring buffer B33 illustrated in Fig. 33 (step S1301).

Fig. 33 is a table illustrating the data configuration of the ring buffer B33 according to the second embodiment of the present disclosure. The ring buffer B33 includes N buffers indicated by Indexes of 1 to N (N is an integer greater than or equal to 2), and store the pitch angle sequentially from Index = 1, for instance. When Index = N is reached in the ring buffer B33, the pitch angle stored in the buffer at Index = 1 is deleted, and the latest pitch angle is stored in the buffer at Index = 1 to update the pitch angle. Hereinafter in the ring buffer B33, the pitch angle stored in the buffer is updated in the order of numerical value indicated by Index. Thus, the ring buffer B33 stores the pitch angles for N pieces in the past from the latest pitch angle. It is to be noted that the size of the ring buffer B33 is arbitrary, and a predetermined value is set as the size based on the intervals of update of the control amount C1.

When the ring buffer B33 is filled with pitch angles (Yes in step S1302), the drive controller 204 adds N pitch angles stored in the ring buffer B33 together, and divides the total pitch angles by N to calculate an average pitch angle (step S1303).

Next, the drive controller 204 determines a minimum control amount corresponding to the calculated average pitch angle by referring to the control amount determination database T29 illustrated in Fig. 29 (step S1304).

Next, the drive controller 204 updates the minimum control amount stored in the memory 209 with the determined minimum control amount (step S1305).

For instance, when a minimum control amount determined from the control amount determination database T20 is stored in the memory 209 in step S1105, in step S1305, the minimum control amount is updated with a minimum control amount determined in step S1304.

Also, even when a minimum control amount updated by the processing in previous step S1305 is stored in the memory 209, the minimum control amount is updated with a minimum control amount determined in step S1304.

When the robot 1 arrives at the deceleration start location, the minimum control amount stored then in the memory 209 is inputted to min of Expression (1) and the control amount C1 is calculated.

Consequently, even when the type of floor surface changes after the start of movement, an appropriate minimum control amount is set according to the type of floor surface after the change. Also, even when the type of floor surface changes twice or more during movement of the robot 1, an appropriate minimum control amount is set according to the type of floor surface at the target location.

In the flowchart, the distance from the deceleration start location to the target location is short, and it is assumed that the type of floor surface does not change on the way, and at the time of arrival to the deceleration start location, the minimum control amount stored in the memory 209 is inputted into min of Expression (1).

In step S1302, when the ring buffer B33 is not filled with the pitch angles (No in step S1302), the drive controller 204 does not perform the processing in step S1303 to step S1305, and terminates the update processing for minimum control amount.

As described above, with the robot 1 according to the second embodiment, even when the type of floor surface changes during movement of the robot 1, an appropriate minimum control amount according to the type of floor surface after the change is determined, thus the robot 1 can be moved smoothly without stopping the robot 1 on the way to the target location.

In the second embodiment, the control amount determination database T20 and the control amount determination database T29 are formed of different databases. However, this is an example, and both databases may be integrated into one database as illustrated in Fig. 34. Fig. 34 is a table illustrating the data configuration of a control amount determination database T34 according to a modification of the second embodiment of the present disclosure.

It can be seen that in the control amount determination database T34, a maximum pitch angle for a minimum control amount and an average pitch angle during operation are stored in association with each other, and the control amount determination database T20 and the control amount determination database T29 are integrated into one database.

When the control amount determination database T34 is used, in step S1105 of Fig. 31, the field of "maximum pitch angle" is referred to, and a minimum control amount corresponding to the detected maximum pitch angle is determined. Also, in step S1304 of Fig. 32, the field "average pitch angle during operation" is referred to, and a minimum control amount corresponding to the calculated average pitch angle is determined.

Also, in the flowchart of Fig. 32, when the ring buffer B33 is not filled with pitch angles, a minimum control amount is not determined, and this is an example. In the present disclosure, when the ring buffer B33 is not filled with pitch angles, a minimum control amount may be determined based on the maximum pitch angle among the pitch angles stored in the ring buffer B33.

Consequently, even when the distance to the target location falls below the deceleration start distance before an average pitch angle is determined, the present disclosure allows the deceleration control to be performed using a minimum control amount.

The present disclosure is useful for a household robot.

**Claims**

1. A robot, comprising:

   a spherical body;
   a frame disposed inside the spherical body;
   a display that is in the frame and configured to display at least part of a face of the robot;
   drive wheels that are in the frame, in contact with an inner circumferential surface of the spherical body, and configured to cause the spherical body to move by rotating the spherical body;
   a drive mechanism that is in the frame and configured to control rotation of the spherical body by controlling the drive wheels;
   an angular speed sensor that is configured to detect an angular speed of the display, around an axis in a horizontal direction perpendicular to a moving direction of the spherical body;
   a memory that stores a correspondence relationship between a reference pitch angle and a minimum control amount, the reference minimum control amount being used by the drive mechanism for moving the spherical body without stopping; and
   a control circuit that is configured to, when the robot moves to a predetermined target point by rotating the spherical body:

      detect a value of a pitch angle that changes since an instruction to rotate the spherical body is received by the drive mechanism, the pitch angle being a cumulative value of the detected angular speed;
      determine the minimum control amount corresponding to the detected value of the pitch angle by referring to the correspondence relationship;

when the robot is at a predetermined distance short of the predetermined target point, generate a deceleration control amount for the drive mechanism that is greater than or equal to the minimum control amount, according to a remaining distance to the predetermined target point; and

decelerate the rotation of the spherical body by controlling the drive mechanism in accordance with the deceleration control amount.

2. The robot according to Claim 1,
   wherein the reference pitch angle includes a first reference pitch angle and a second reference pitch angle,
   before the robot starts to move, the control circuit is further configured to:

   detect a maximum value of the pitch angle; and
   determine the minimum control amount is a first control amount, which corresponds to the first reference pitch angle, corresponding to the detected maximum value of the pitch angle by referring to the correspondence relationship;

   after the robot starts to move, the control circuit is further configured to:

   detect an average value of the pitch angle;
   determine the minimum control amount is a second control amount, which corresponds to the second reference pitch angle, corresponding to the detected average value of the pitch angle by referring to the correspondence relationship; and
   generate the deceleration control amount that is greater than or equal to the minimum control amount which is determined before the robot arrives at a location which is the predetermined distance short of the predetermined target point.

3. The robot according to Claim 1,
   wherein the control circuit decelerates the rotation of the spherical body by decreasing the deceleration control amount by S-curve control.

4. The robot according to Claim 3,
   wherein, when movement of the robot is started by rotating the spherical body, the control circuit is further configured to accelerate the rotation of the spherical body by increasing an acceleration control amount for accelerating the rotation of the spherical body by trapezoidal control until a rotational speed of the spherical body is a predetermined speed.

5. The robot according to Claim 4,
   wherein, after the rotational speed of the spherical body is the predetermined speed, the control circuit is further configured to maintain the rotational speed of the spherical body at the predetermined speed until the robot arrives at the predetermined distance short of the predetermined target point.

6. The robot according to Claim 1, further comprising:

   a camera included in the frame; and
   a microphone included in the frame,
   wherein the memory stores a reference data image for checking a person and reference voice data for recognizing a voice, and
   the control circuit is further configured to, when determining that a predetermined person utters predetermined words based on voice data input from the microphone and the reference voice data and when recognizing the predetermined person based on image data input from the camera and the reference data image, set a location of the predetermined person as the predetermined target point.

7. The robot according to Claim 1,
   wherein the control circuit generates the deceleration control amount by a calculation expression f:

$$(SIN(3{\cdot}\pi/2 - \pi/L{\cdot}d) + 1){\cdot}(Max - min)/2 + min,$$

and
in the calculation expression:

d is indicates a distance in meters from a location of the robot to the predetermined target point;
Max is a control amount in hertz when the control circuit starts to control the drive mechanism in accordance with the deceleration control amount;
min is the minimum control amount; and
L is the predetermined distance from the predetermined target point.

# FIG. 1

# FIG. 2

# FIG. 3

# FIG. 4

FIG. 5

101

111

110

FIG. 6

101

FIG. 7

WEIGHT DRIVE
MECHANISM

114

103

104

116

FIG. 8A

FIG. 8B

FIG. 8C

## FIG. 9A

117

## FIG. 9B

116

118

117

## FIG. 9C

116

## FIG. 10

## FIG. 11

## FIG. 12

## FIG. 13

## FIG. 14

FIG. 15

1200

# FIG. 16

EP 3 428 763 A1

## FIG. 17

FIG. 18

# FIG. 19

## FIG. 20

T20

| MAXIMUM PITCH ANGLE [deg] | MINIMUM CONTROL AMOUNT [Hz] |
|---|---|
| 0≤deg<5 | 100 |
| 5≤deg<10 | 150 |
| 10≤deg<15 | 200 |
| 15≤deg<20 | 250 |
| 20≤deg<25 | 300 |
| 25≤deg<30 | 350 |
| 30≤deg | 400 |

## FIG. 21

FIG. 22

FIG. 23

## FIG. 24

ELAPSED TIME [s]

0.00 0.20 0.40 0.60 0.80 1.00 1.20 1.40 1.60 1.80 2.00 2.20 2.40 2.60 2.80 3.00 3.20 3.40 3.60

CONTROL AMOUNT [Hz]

—— WOOD FLOOR

········· CARPET TILE

—·—· CARPET (LOW FRICTION)

– – – CARPET (HIGH FRICTION)

## FIG. 25

START

S101

TARGET LOCATION SETTING

S102

MOVEMENT PATH GENERATION

S103

DRIVE CONTROL

END

# FIG. 26

```
        ( TARGET LOCATION SETTING )
                    │
                    ▼        ╭─ S1001
              ╱ HAS AUDIO ╲         NO
           ╱ SIGNAL BEEN OBTAINED FROM ╲ ─────────►
              ╲ MICROPHONE? ╱
                    │ YES      ╭─ S1002
                    ▼
        │ PERFORM VOICE RECOGNITION PROCESSING │
                    │
                    ▼        ╭─ S1003
            ╱ DOES VOICEPRINT ╲
         ╱ MATCH ONE OF PIECES OF ╲    NO
         ╲ USER INFORMATION IN ╱ ─────────►
            ╲ MEMORY? ╱
                    │ YES      ╭─ S1004
                    ▼
        │ LET FIRST USER BE USER HAVING │
        │ MATCHED VOICEPRINT INFORMATION │
                    │
                    ▼        ╭─ S1005
            ╱ IS FIRST ╲          NO
         ╱ KEYWORD INCLUDED IN SPEECH ╲ ─────────►
            ╲ INFORMATION? ╱
                    │ YES
                    ▼        ╭─ S1006
        │ OBTAIN IMAGE DATA FROM CAMERA │
                    │
                    ▼        ╭─ S1007
            ╱ DETECT FIRST USER ╲    NO
            ╲ FROM IMAGE DATA ╱ ─────────►
                    │ YES      ╭─ S1008
                    ▼
        │ DETECT DIRECTION OF FIRST USER BASED │
        │ ON LOCATION OF FIRST USER IN IMAGE DATA │
                    │                ╭─ S1009
                    ▼
        │ OBTAIN DISTANCE INFORMATION FOR DIRECTION │
        │ OF FIRST USER FROM DISTANCE SENSOR │
                    │                ╭─ S1010
                    ▼
        │ SET LOCATION OF FIRST USER IN MAP INFORMATION │
                    │                ╭─ S1011
                    ▼
        │ SET LOCATION OF FIRST USER TO TARGET LOCATION │
                    │
                    ▼
               ( END )
```

# FIG. 27

DRIVE CONTROL

S1101 OBTAIN ANGULAR SPEED IN PITCH DIRECTION FROM ANGULAR SPEED SENSOR

S1102 CALCULATE AMOUNT OF CHANGE IN PITCH ANGLE PER UNIT TIME

S1103 ACCUMULATE AMOUNT OF CHANGE IN PITCH ANGLE

S1104 HAS PITCH ANGLE CONTINUOUSLY DECREASED PREDETERMINED NUMBER OF TIMES? — NO

YES

S1105 IDENTIFY MAXIMUM PITCH ANGLE

S1106 DETERMINE MINIMUM CONTROL AMOUNT

S1107 ESTIMATE SELF-LOCATION

S1108 CALCULATE REMAINING DISTANCE TO TARGET LOCATION

S1109 HAS ROBOT ARRIVED TO TARGET LOCATION? — NO

YES

S1110 GENERATE STOP CONTROL AMOUNT

S1111 IS REMAINING DISTANCE LESS THAN OR EQUAL TO DECELERATION START DISTANCE? — NO

YES

S1112 GENERATE DECELERATION CONTROL AMOUNT ACCORDING TO REMAINING DISTANCE FROM EXPRESSION (1)

S1113 IS CONTROL AMOUNT LESS THAN MAXIMUM CONTROL AMOUNT? — NO

YES

S1114 GENERATE ACCELERATION CONTROL AMOUNT

S1115 GENERATE UNIFORM SPEED CONTROL AMOUNT

S1116 OUTPUT CONTROL AMOUNT TO BODY DRIVE MECHANISM CONTROLLER

S1117 HAS STOP CONTROL AMOUNT BEEN OUTPUTTED? — YES

END

NO

S1118 HAS MINIMUM CONTROL AMOUNT BEEN DETERMINED? — YES

NO

EP 3 428 763 A1

## FIG. 28

## FIG. 29

T29

| AVERAGE PITCH ANGLE AT TIME OF OPERATION [deg] | MINIMUM CONTROL AMOUNT [Hz] |
|---|---|
| $0 \leq deg < 3$ | 100 |
| $3 \leq deg < 6$ | 150 |
| $6 \leq deg < 9$ | 200 |
| $9 \leq deg < 12$ | 250 |
| $12 \leq deg < 15$ | 300 |
| $15 \leq deg < 18$ | 350 |
| $18 \leq deg$ | 400 |

40

## FIG. 30

# FIG. 31

DRIVE CONTROL

S1101
OBTAIN ANGULAR SPEED IN PITCH DIRECTION FROM ANGULAR SPEED SENSOR

S1102
CALCULATE AMOUNT OF CHANGE IN PITCH ANGLE PER UNIT TIME

S1103
ACCUMULATE AMOUNT OF CHANGE IN PITCH ANGLE

S1104
HAS PITCH ANGLE CONTINUOUSLY DECREASED PREDETERMINED NUMBER OF TIMES?

NO

YES

S1105
IDENTIFY MAXIMUM PITCH ANGLE

S1106
DETERMINE MINIMUM CONTROL AMOUNT

S1107
ESTIMATE SELF-LOCATION

S1108
CALCULATE REMAINING DISTANCE TO TARGET LOCATION

S1109
HAS ROBOT ARRIVED TO TARGET LOCATION?

NO

YES

S1110
GENERATE STOP CONTROL AMOUNT

S1111
IS REMAINING DISTANCE LESS THAN OR EQUAL TO DECELERATION START DISTANCE?

NO

YES

S1112
GENERATE DECELERATION CONTROL AMOUNT ACCORDING TO REMAINING DISTANCE FROM EXPRESSION (1)

S1201
UPDATE MINIMUM CONTROL AMOUNT

S1113
IS CONTROL AMOUNT LESS THAN MAXIMUM CONTROL AMOUNT?

NO

YES

S1114
GENERATE ACCELERATION CONTROL AMOUNT

S1115
GENERATE UNIFORM SPEED CONTROL AMOUNT

S1116
OUTPUT CONTROL AMOUNT TO BODY DRIVE MECHANISM CONTROLLER

S1117
HAS STOP CONTROL AMOUNT BEEN OUTPUTTED?

YES

END

NO

S1118
HAS MINIMUM CONTROL AMOUNT BEEN DETERMINED?

YES

NO

42

## FIG. 32

UPDATE OF MINIMUM CONTROL AMOUNT

S1301
OBTAIN ANGULAR SPEED FROM
ANGULAR SPEED SENSOR AND STORE
CALCULATED PITCH ANGLE IN RING BUFFER

S1302
IS RING BUFFER
FILLED WITH DATA? — NO

YES
S1303
CALCULATE AVERAGE PITCH ANGLE

S1304
DETERMINE MINIMUM CONTROL AMOUNT
CORRESPONDING TO AVERAGE PITCH ANGLE

S1305
STORE MINIMUM CONTROL AMOUNT

END

## FIG. 33

B33

| INDEX | PITCH ANGLE [deg] |
|:-----:|:-----------------:|
| 1 | 3 |
| 2 | 2 |
| 3 | 4 |
| ⋮ | ⋮ |
| N | 3 |

## FIG. 34

T34

| MAXIMUM PITCH ANGLE [deg] | AVERAGE PITCH ANGLE AT TIME OF OPERATION [deg] | MINIMUM CONTROL AMOUNT [Hz] |
|:-------------------------:|:----------------------------------------------:|:---------------------------:|
| $0 \leq deg < 5$ | $0 \leq deg < 3$ | 100 |
| $5 \leq deg < 10$ | $3 \leq deg < 6$ | 150 |
| $10 \leq deg < 15$ | $6 \leq deg < 9$ | 200 |
| $15 \leq deg < 20$ | $9 \leq deg < 12$ | 250 |
| $20 \leq deg < 25$ | $12 \leq deg < 15$ | 300 |
| $25 \leq deg < 30$ | $15 \leq deg < 18$ | 350 |
| $30 \leq deg$ | $18 \leq deg$ | 400 |

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/168240 A1 (WILSON ADAM [US] ET AL) 5 July 2012 (2012-07-05) | 1,2,7 | INV. G05D1/08 A63H33/00 B25J9/00 |
| Y | * Paragraphs [0039], [0047], [0089], [0090], [0093], [0096], [0107], [0108], [0123], [0183]; Figures 1, 3, 5 * | 3-6 | |
| Y | FENGSHAN ZOU ET AL: "Asymmetric s-curve trajectory planning for robot point-to-point motion", ROBOTICS AND BIOMIMETICS (ROBIO), 2009 IEEE INTERNATIONAL CONFERENCE ON, IEEE, PISCATAWAY, NJ, USA, 19 December 2009 (2009-12-19), pages 2172-2176, XP031641778, ISBN: 978-1-4244-4774-9 * Abstract, page 2172 left column introduction, page 2176 right column conclusion. * | 3-5 | |
| Y | US 2005/091684 A1 (KAWABATA SHUNICHI [JP] ET AL) 28 April 2005 (2005-04-28) * Paragraphs [0026], [0027], [0067], [0072], [0073]; Figure 1. * | 6 | TECHNICAL FIELDS SEARCHED (IPC) G05D B25J A63H B62D G06N G05B |
| A | US 2016/184990 A1 (SONG KAI-TAI [TW] ET AL) 30 June 2016 (2016-06-30) * Paragraphs [0009], [0013], [0058], [0059], [0066], [0067]; Figure 2. * | 1-7 | |

-/--

The present search report has been drawn up for all claims

| Place of search | Date of completion of the search | Examiner |
|---|---|---|
| Munich | 28 November 2018 | Roch, Vincent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

Europäisches
Patentamt

European
Patent Office

Office européen
des brevets

## EUROPEAN SEARCH REPORT

Application Number

EP 18 18 2851

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | H Z Li ET AL: "Motion profile planning for reduced jerk and vibration residuals", , 31 January 2007 (2007-01-31), XP055519004, DOI: 10.13140/2.1.4211.2647 Retrieved from the Internet: URL:https://www.researchgate.net/profile/Huaizhong_Li/publication/267794207_Motion_profile_planning_for_reduced_jerk_and_vibration_residuals/links/54e99a0a0cf25ba91c7f2b0a/Motion-profile-planning-for-reduced-jerk-and-vibration-residuals.pdf [retrieved on 2018-10-25] * Abstract, page 32 left column last paragraph, page 32 right column second paragraph, * ----- | 3-5 | |

TECHNICAL FIELDS
SEARCHED      (IPC)

The present search report has been drawn up for all claims

| Place of search | Date of completion of the search | Examiner |
|---|---|---|
| Munich | 28 November 2018 | Roch, Vincent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 18 2851

This annex lists the patent family members relating to the patent documents cited in  the above-mentioned European search report.
The members are as contained in the European Patent Office EDP file on
The European Patent Office is in no way liable for these particulars which are merely given for the purpose of information.

28-11-2018

| Patent document cited in search report | | | Publication date | Patent family member(s) | | | Publication date |
|---|---|---|---|---|---|---|---|
| US 2012168240 | A1 | | 05-07-2012 | EP | 2661311 | A2 | 13-11-2013 |
| | | | | US | 2012168240 | A1 | 05-07-2012 |
| | | | | US | 2012168241 | A1 | 05-07-2012 |
| | | | | US | 2012173047 | A1 | 05-07-2012 |
| | | | | US | 2012173048 | A1 | 05-07-2012 |
| | | | | US | 2012173049 | A1 | 05-07-2012 |
| | | | | US | 2012173050 | A1 | 05-07-2012 |
| | | | | US | 2014020964 | A1 | 23-01-2014 |
| | | | | US | 2014236393 | A1 | 21-08-2014 |
| | | | | US | 2015362919 | A1 | 17-12-2015 |
| | | | | US | 2015370257 | A1 | 24-12-2015 |
| | | | | US | 2016004253 | A1 | 07-01-2016 |
| | | | | US | 2016033967 | A1 | 04-02-2016 |
| | | | | US | 2016202696 | A1 | 14-07-2016 |
| | | | | US | 2016282871 | A1 | 29-09-2016 |
| | | | | US | 2016291591 | A1 | 06-10-2016 |
| | | | | US | 2018113449 | A1 | 26-04-2018 |
| | | | | US | 2018224845 | A1 | 09-08-2018 |
| | | | | WO | 2012094349 | A2 | 12-07-2012 |
| US 2005091684 | A1 | | 28-04-2005 | JP | 2005103679 | A | 21-04-2005 |
| | | | | US | 2005091684 | A1 | 28-04-2005 |
| US 2016184990 | A1 | | 30-06-2016 | TW | 201622916 | A | 01-07-2016 |
| | | | | US | 2016184990 | A1 | 30-06-2016 |

EPO FORM P0459

For more details about this annex : see Official Journal of the European Patent Office, No. 12/82

**REFERENCES CITED IN THE DESCRIPTION**

**Patent documents cited in the description**

- JP 2004306251 A